(19) **Europäisches Patentamt / European Patent Office / Office européen des brevets**

(11) **EP 2 660 664 A1**

(12) **EUROPEAN PATENT APPLICATION**
published in accordance with Art. 153(4) EPC

(43) Date of publication:
**06.11.2013 Bulletin 2013/45**

(21) Application number: **10819699.9**

(22) Date of filing: **27.12.2010**

(51) Int Cl.:
**G05B 13/02** (2006.01)     **H02J 3/00** (2006.01)

(86) International application number:
**PCT/ES2010/070870**

(87) International publication number:
**WO 2012/089855 (05.07.2012 Gazette 2012/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Fundacion Tecnalia Research & Innovation**
**48160 Derio (Vizcaya) (ES)**

(72) Inventors:
- **RUIZ CARAMÉS, Nerea**
  **E-48160 Derio (Vizcaya) (ES)**

- **COBELO ECHEVARRIA, Iñigo**
  **E-48160 Derio (Vizcaya) (ES)**
- **PEREA OLAVARRÍA, Eugenio**
  **E-48160 Derio (Vizcaya) (ES)**
- **CARRASCAL ROSAL, Alberto**
  **E-48160 Derio (Vizcaya) (ES)**
- **AZPEITIA GARCÍA, Ander**
  **E-48160 Derio (Vizcaya) (ES)**

(74) Representative: **Carpintero Lopez, Francisco et al**
**Herrero & Asociados, S.L.**
**C/Alcalá 35**
**28014 Madrid (ES)**

(54) **METHOD FOR ECONOMICALLY OPTIMIZING THE OPERATION OF MICRO-COGENERATOR APPARATUSES**

(57)     The present invention relates to a method for controlling the operation of at least one micro cogeneration unit which is part of a system for producing energy, which also comprises an auxiliary heat production system and a heat storage system, said method optimizes the operation of the at least one micro cogeneration unit according to economic criteria. The method comprises optimizing a target function where a series of weights which penalize the violation of certain constraints can be included and the values obtained from the optimization are used to control the operation of the at least one micro cogeneration unit, values between 0 and 1 being those which regulate the output of the micro cogeneration unit.

**FIG. 1**

**Description**

Field of the Invention

The present invention relates to micro cogeneration systems, more specifically to the field of optimizing the operation of micro cogeneration units for producing energy.

Prior Art

Cogeneration is the simultaneous production of useful heat and electricity close to consumption points. Therefore, they are systems which use the energy from the primary fuel in a substantially more efficient way than separate production technologies do. When this cogeneration is small-scale (up to 50 kW although sometimes this term usually extends up to outputs of 1 MW) it is referred to as micro-cogeneration. Applications of this type are being successfully implemented in the tertiary and residential sector.

When analyzing the prior art, documents can be found in the same area as the present invention. Those which are more closely related are:

United States patent US6757591 B2, which relates to managing the energy sources of a building. It includes a heat storage unit and a refrigeration unit. The process is controlled by a thermal flow and electrical flow optimizer which distributes the flows by means of calculating an index of performance indicative of the current energy cost divided by the target energy. The solution of the optimization equations uses fuzzy logic techniques by means of a control surface. It offers a target function that can apply to energy sources in general, but it is not exclusively based on economic criteria. United States patent application US20060051633 A1 proposes a configuration based on providing a heat load to plan operating the fuel cell. The target is to minimize operating costs. It is decided whether the fuel cell should be operated depending on whether or not the amount of heat stored in the heat storage system is enough to cover the expected heat demand (with a certain margin). In the event that it decides to operate, it checks if it is more economical to use the fuel cell or an external heat system

The normal operation of these systems today is standard depending on the thermostat-regulated heat load set-points based on the temperature of the fluid stored in the heat storage system. Economic parameters are therefore not taken into account.

General Description of the Invention

The present invention solves the aforementioned problems, covering the energy demand of a building, minimizing costs and, at the same time, maximizing the income from the generated electricity.

From a series of input data, together with imposed constraints which benefit the proper working of the system to which the invention is applied, a function resulting in optimal values of a variable controlling the micro cogeneration units of the system is minimized taking economic criteria into account.

A first aspect of the invention relates to a method for controlling the operation of at least one micro cogeneration unit which is part of a system for producing energy also comprising an auxiliary heat production system (e.g. boiler) and a heat storage system (e.g. hot water tank), said method optimizes the operation of the at least one micro cogeneration unit according to economic criteria, the method being characterized in that it comprises the following steps:

- obtaining input data which technically characterize the system and are described below:

$P_{chp}^{heat,j}$ = heat output of the micro cogeneration unit j;

$P_{chp}^{elect,j}$ = electrical output of the micro cogeneration unit j;

$\Delta z$ = duration of a time interval z;

$Pr_z^{gas,j}$ = price of the gas consumed by the micro cogeneration unit j in a time interval z;

$\eta_{chp}^{j}$ = overall efficiency of the micro cogeneration unit j;

$Pr_z^{gas,prodAux}$ = price of the gas consumed by the auxiliary heat production system in a time interval z;

$\eta_{prodAux}$ = heat efficiency of the auxiliary heat production system;
N = number of time intervals in the period considered;
J = total number of micro cogeneration units in the system;

- defining the value of parameters or weights which penalize the violation of constraints on the maximum number of starts of the at least one micro cogeneration unit during the programming, on the minimum working time period of the at least one micro cogeneration unit once it has started and on the temperature in the heat storage system and on the dissipated heat in the heat sink.

$w_{cost}$ = weight which weights the cost;

$w_{notMinimum}$ = weight which penalizes the violation of a minimum on time;

$w_{dissipated}$ = weight which penalizes an energy excess in a heat sink part of the system;

$w_{tempStore}$ = weight which penalizes the difference between the temperature of the fluid in the heat storage system at the beginning and at the end of the programming period;

$w_{times\ on}^{more}$ = weight which penalizes exceeding the number of times on limit. $w_{times\ on}^{fewer}$ = weight which rewards not exceeding the number of times on limit.

-

- obtaining from the defined input data and weights a value of a variable $x_z^j$ which minimizes the following function:

$$\text{Min}(w_{cost} \cdot \sum_{z=1}^{N} \left[ \left( \sum_{j=1}^{J} \left( \frac{(P_{chp}^{heat,j} + P_{chp}^{elect,j}) \cdot \Delta z \cdot Pr_z^{gas,j}}{\eta_{chp}^j} \cdot x_z^j \right) \right) - B_z^{electr} + \frac{Pr_z^{gas,prodAux}}{\eta_{prodAux}} \cdot Q_z^{prodAux} \right] +$$

$$\sum_{j=1}^{J} (Wei_j^{starts}) + w_{notMinimum} \cdot (\sum_{j=1}^{J} (\rho_j^{durationStartCHP})) + w_{dissipated} \cdot \rho^{heat\ sink} +$$

$$w_{tempStor} \cdot \rho^{tempStor} \cdot \text{Periodicity})$$

where:

$x_z^j$ is the operating set-point of the micro cogeneration unit j in a time interval z, $x_z^j$ takes values between zero and one;

$Q_z^{prodAux}$ = heat energy produced by the auxiliary heat production system in a time interval z;

$Pon_j^{starts}$ = number of starts above or below the maximum number of starts allowed for a micro cogeneration unit j weighted by weights, being equal to: $\rho_j^{startsCHP} \cdot w_{times\ on}^{more}$ if $\rho_j^{startsCHP} > 0$; and equal to $\rho_j^{startsCHP} \cdot w_{times\ on}^{fewer}$ if $\rho_j^{startsCHP} \leq 0$; $\rho_j^{durationStartCHP}$ = sum of the number of time intervals it takes to reach the minimum time that the micro cogeneration unit j must be working every time it is connected;

$\rho^{heatsink}$ = heat energy which cannot be dissipated by the heat sink;

$\rho^{tempStor}$ = difference between the temperature in the initial time interval and the end time interval in the heat storage system.

*Periodicity* = controls the penalization on the temperature in the heat storage system at the beginning and at the end of a period taking the values zero or one to deactivate or activate said penalization;

$B_z^{elect}$ = total electric profit in a time interval z, it is calculated as the sum of the electric profits corresponding to all the micro cogeneration units present in the installation depending on economic criteria;

- controlling the operation of the at least one micro cogeneration unit during the time interval z from the value obtained for the variable $x_z^j$, such that if said value is equal to zero the micro cogeneration unit switches off and if it is equal to one the micro cogeneration unit switches on at maximum output during the time interval z.

The at least one micro cogeneration unit is interconnected with a building and a distribution network such that the electrical energy it produces is directed either towards said distribution network or towards the building for its self-consumption depending on the electricity purchase and sale prices and the topology of the interconnection between the at least one micro cogeneration unit and the distribution network. The electric profit is thus calculated in the event that 3 conditions are met: the electric demand of the building is greater than or equal to the electric production of the at least one micro cogeneration unit; the electricity sale price is greater than or equal to the electricity purchase price and the topology of the interconnection between the at least one micro cogeneration unit and the distribution network does not allow purchasing and selling electricity at the same time, or the electricity sale price is less than the electricity purchase price; and the topology of the interconnection between the at least one micro cogeneration unit and the distribution network allows self-consuming the electricity produced by the at least one micro cogeneration unit and purchasing the electrical energy it takes to cover the electric demand of the building; if these 3 conditions are met, the electric profit is defined as: $Tp_z^{elect} \cdot \Pr_z^{purchElect}$;

considering:

$Tp_z^{elect}$ = electric production of the at least one micro cogeneration unit in a time interval z;

$\Pr_z^{purchElect}$ = electricity purchase price in the time interval z;

In the present invention, the at least one micro cogeneration unit can also be interconnected with a building and a distribution network such that the electrical energy it produces is directed either towards said distribution network or towards the building for its self-consumption depending on the electricity purchase and sale prices and the topology of the interconnection between the at least one micro cogeneration unit and the distribution network. The electric profit is thus calculated in the event that 3 conditions are met: the electric demand of the building is less than the electric production of the at least one micro cogeneration unit; the electricity sale price is greater than or equal to the electricity purchase price and the topology of the interconnection between the at least one micro cogeneration unit and the distribution network does not allow purchasing and selling electricity at the same time, or the electricity sale price is less than the electricity purchase price; and the topology of the interconnection between the at least one micro cogeneration unit and the distribution network allows self-consuming the electricity produced by the at least one micro cogeneration unit and selling the surplus electrical energy after covering the electric demand of the building; if these 3 conditions are met

the electric profit is defined as: $D_z^{elect} \cdot \Pr_z^{purchElect} + (Tp_z^{elect} - D_z^{elect}) \cdot \Pr_z^{saleElect}$;

considering:

$D_z^{elect}$ = electric demand of the building in the time interval z

$Tp_z^{elect}$ = electric production of the at least one micro cogeneration unit in a time interval z;

$\Pr_z^{purchElect}$ = electricity purchase price in the time interval z;

If the preceding conditions are not met, the electric profit is defined as: $Tp_z^{elect} \cdot \Pr_z^{saleElect}$;

considering:

$\Pr_z^{saleElect}$ = electricity sale price in the time interval z.

The method of the invention proposes solving the problem of optimizing the function by means of a metaheuristic optimization technique using a genetic algorithm with real encoding to represent each of the solutions of the problem, where the genes of the algorithm represent the values $x_z^j$ which control a micro cogeneration unit j in a time interval z

The genetic algorithm can use the following operators:

- classic mutation operator: randomly selected gene values are switched with also randomly generated values using to that end a mutation probability value;
- one-point crossover operator: the value assigned to the children's genes is inherited from the parents. The selected point determines after which gene the genes come from one parent or the other;
- selection operator: the probability of selecting an individual is proportional to its goodness of fit;
- local Gaussian search operator: changes are made in all the genes of the individual using Gaussian distribution for that purpose.

Another aspect of the invention relates to a method for controlling the operation of at least one micro cogeneration unit which is part of a system for producing energy, also comprising an auxiliary heat production system (e.g. a boiler) and a heat storage system (e.g. a hot water tank), said method optimizes the operation of the at least one micro cogeneration unit in a time interval z determined according to economic criteria, the method being characterized in that it comprises the following steps:

- obtaining the following input data which technically characterize the system:

$P_{chp}^{heat, j}$ = heat output of the micro cogeneration unit j;

$P_{chp}^{elect, j}$ = electrical output of the micro cogeneration unit j;

$\Delta z$ = duration of a time interval z;

$Pr_z^{gas, j}$ = price of the gas consumed by the micro cogeneration unit j in a time interval z;

$\eta_{chp}^{j}$ = overall = overall efficiency of the micro cogeneration unit j;

$Pr_z^{gas, prodAux}$ = price of the gas consumed by the auxiliary heat production system in a time interval z;

$\eta_{prodAux}$ = heat efficiency of the auxiliary heat production system;
N = number of time intervals in the period considered;
J = total number of micro cogeneration units in the system;

-

obtaining from the input data a value of a variable $x_z^j$ which minimizes the following target function:

$$\text{Min} \sum_{z=1}^{N} \left[ \left( \sum_{j=1}^{J} \left( \frac{(P_{chp}^{heat,j} + P_{chp}^{elect,j}) \cdot \Delta z \cdot Pr_z^{gas,j}}{\eta_{chp}^{j}} - B_z^{elect,j} \right) \cdot x_z^j \right) + \frac{Pr_z^{gas,prodAux}}{\eta_{prodAux}} \cdot Q_z^{prodAux} \right];$$

where:

$x_z^j$ is the operating set-point of the micro cogeneration unit j in a time interval z, $x_z^j$ takes values zero or one;

$Q_z^{prodAux}$ = heat energy produced by the auxiliary heat production system in a time interval z;

$B_z^{elect}$ = total electric profit in a time interval z, it is calculated as the sum of the electric profits corresponding to all the micro cogeneration units present in the installation depending on economic criteria;

- controlling the operation of the at least one micro cogeneration unit during the time interval z from the value obtained for the variable $x_z^j$, if said value is equal to zero the micro cogeneration unit switches off and if it is equal to one the micro cogeneration unit switches on at maximum output during the time interval z.

The at least one micro cogeneration unit is interconnected with a distribution network and a building, such that the electrical energy it produces is directed either towards said distribution network or towards said building for its self-consumption depending on an economic criterion which is a comparison between an electricity purchase price and sale price for each time interval z, such that in the case in which the sale price is greater than the purchase price; or the sale price is less than the purchase price and the electrical energy produced by the at least one micro cogeneration unit is less than the electric demand of the building; the electrical energy generated by the at least one micro cogeneration unit is directed towards the distribution network and, in that case, the electric profit is defined as:

$$B_z^{elect} = Pr_z^{saleElectr} \cdot P_{chp}^{elect} \cdot \Delta z; \quad z=1...N;$$

considering the input data:

$$P_{chp}^{elect,\, j} = \text{electrical output of the micro cogeneration unit j};$$

$$Pr_z^{saleElect} = \text{electricity sale price in the time interval z};$$

and in the case in which the purchase price is greater than the sale price and the electrical energy generated by the at least one micro cogeneration unit is greater than the electric demand of the building, it is directed towards the building and the electric profit is: $B_z^{electr} = Pr_z^{purchElectr} \cdot P_{chp}^{elect} \cdot \Delta z; \quad z=1...N;$

also considering the input data:

$$Pr_z^{purchElect} = \text{electricity purchase price in the time interval z}.$$

The at least one micro cogeneration unit can also be interconnected with a distribution network and a building such that all the energy it produces is directed towards the building and in that case if the electrical energy produced is less than the electric demand of the building, the electric profit is defined as: $B_z^{electr} = Pr_z^{purchElectr} \cdot P_{chp}^{elect} \cdot \Delta z; \quad z = 1...N;$

and in the case in which the electrical energy produced is greater than the electric demand of the building, the surplus energy is supplied to the distribution network, the electric profit being defined as:

$$B_z^{electr} = Pr_z^{saleElectr} \cdot (P_{chp}^{elect} \cdot \Delta z - D_z^{elect}) + Pr_z^{purchElect} \cdot D_z^{elect}; \quad z = 1...N;$$

also considering the input data:

$$P_{chp}^{elect,\, j} = \text{electrical output of the micro cogeneration unit j};$$

$$Pr_z^{purchElect} = \text{electricity purchase price in the time interval z};$$

$$Pr_z^{saleElect} = \text{electricity sale price in the time interval z};$$

$$D_z^{elect} = \text{electric demand in the time interval z}.$$

The at least one micro cogeneration unit can be interconnected with a distribution network such that all the electrical energy produced by the at least one micro cogeneration unit is delivered to the distribution network and in that case the electric profit is defined as: $B_z^{elect,j} = Pr_z^{saleElectr} \cdot P_{chp}^{elect,j} \cdot \Delta z; \quad z = 1...N; \quad j = 1...J;$

also considering the input data:

$$Pr_z^{saleElect} = \text{electricity sale price in the time interval z};$$

$$P_{chp}^{elect,j} = \text{electrical output of the micro cogeneration unit j};$$

The present invention proposes solving the problem of optimizing the target function by means of a technique for solving mixed integer linear problems applied on said target function and some constraints.
The constraints contemplated for solving the problem comprise:

-   a heat balance constraint for the heat storage system; an initial temperature constraint for the heat storage system;

and a maximum temperature and minimum temperature constraint for the heat storage system.

- a production limit constraint for the auxiliary heat production system and/or energy generation set-point constraints of the auxiliary heat production system in the system which are:

  - if there is a heat demand in the system less than the energy generated by the at least one micro cogeneration unit plus all the energy stored in the heat storage system, the auxiliary heat production system produces an amount of energy equal to zero;
  - if there is a heat demand in the system greater than the energy generated by the at least one micro cogeneration unit plus all the energy stored in the heat storage system, the auxiliary heat production system produces energy until covering the heat demand not covered by the at least one micro cogeneration unit and the heat storage system.

- a constraint on the maximum heat dissipated by a heat sink which is part of the system, said dissipated heat cannot exceed the heat energy generated by the at least one micro cogeneration unit at any time instant nor can it exceed a maximum output of the heat sink and/or constraints on the working of the heat sink which are:

  - if the temperature of the fluid in the heat storage system is less than the maximum temperature, the dissipated heat is nil;
  - if the temperature of the fluid in the heat storage system is equal to the maximum temperature, the dissipated heat ranges between zero and the maximum output of the heat sink.

- a constraint which imposes logic conditions for a binary variable which records a stop and a binary variable which records a start of the at least one micro cogeneration unit, assigning a value equal to one to said binary variables in the case of stop or start, respectively, and preventing a value equal to one in the two variables simultaneously.
- Other constraints can optionally be included: a constraint on the minimum working times of the at least one micro cogeneration unit, to that end a constraint is imposed on an initial time interval which forces the at least one micro cogeneration unit to, in the case of being on at the beginning of the period considered, continue being on until exceeding a minimum working time and a constraint for the end intervals of the period considered where there is not a number of consecutive hours equal to the minimum working time; and/or a constraint on the maximum number of starts of the at least one micro cogeneration unit; and/or a periodicity constraint which assures the same temperature of the fluid at the beginning and at the end of the programming period in the heat storage system.

A final aspect of the invention is a computer program which is stored in at least one computer-readable carrier medium and which comprises code means suitable for running the described method when said program is run in a computer or in a digital signal processor or in a field programmable gate array or in a specific application integrated circuit or in a microprocessor or in a microcontroller or in any other form of programmable hardware.

Description of the Drawings

To complement the description being made and for the purpose of aiding to better understand the features of the invention according to a preferred practical embodiment thereof, a set of drawings is attached as an integral part of this description in which the following has been depicted with an illustrative and nonlimiting character:

Figure 1 shows a simplified diagram of the energy production installation to which the method of the invention is applied.
Figure 2 shows a single-line diagram of one of the possible interconnection configurations of the micro cogeneration units and the distribution network, classified as "configuration A".
Figure 3 shows a single-line diagram of one of the possible interconnection configurations of the micro cogeneration units and the distribution network, classified as "configuration A2".
Figure 4 shows a single-line diagram of one of the possible interconnection configurations of the micro cogeneration units and the distribution network, classified as "configuration B".
Figure 5 shows a generic electric price processing diagram.
Figure 6 shows a flow chart of the electric price processing for the so-called "configuration A".
Figure 7 shows a flow chart of the electric price processing for the so-called "configuration B".

Detailed Description of the Invention

The present invention describes a method which solves the economic dispatch problem of one or several micro cogeneration units. The main objective is to provide the operating set-points of the micro cogeneration unit/s throughout a determined programming period according to the electricity purchase/sale prices on the market such that the heat demand of a building is covered with a minimum cost and the income from the electricity generated is maximized.

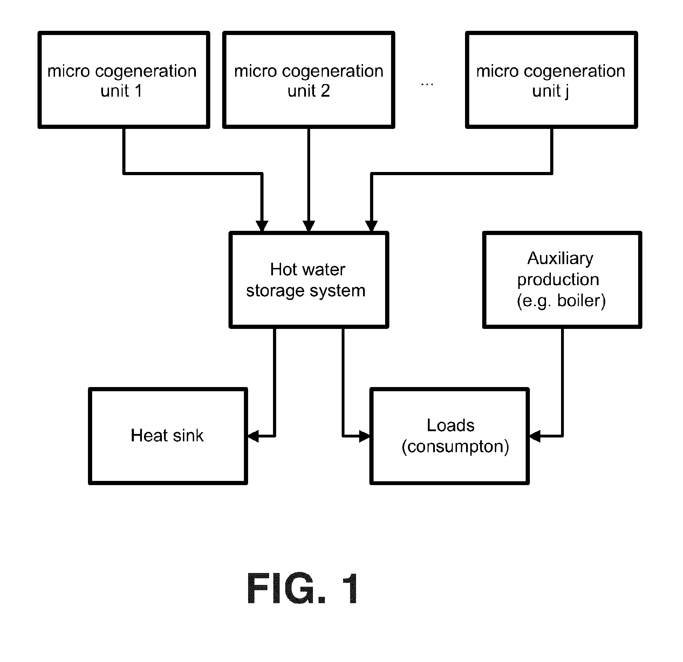

The micro cogeneration system considered is formed by one or several micro cogeneration units providing the base load connected in series to a heat storage system, for example a hot water tank, providing flexibility to the system, which thus allows temporarily decoupling heat generation and consumption. It also has an auxiliary heat energy production system, for example a boiler, the function of which is to supply energy to the system in the time instants in which the micro cogeneration unit-heat storage system assembly is not able to cover the heat demand of the building. Finally, there is an energy dissipation system which allows releasing part of the heat generated by the micro cogeneration unit/s at the times in which the heat storage system is at its maximum storage capacity and it is nevertheless cost-effect from an economic point of view to operate the micro cogeneration unit/s. Figure 1 shows a possible simplified diagram of the installation.

The algorithm that is developed results in the operating set-points of the micro-cogeneration unit/s for a determined time horizon (e.g. 24 hours). Depending on the features of the micro cogeneration units present in the installation, these set-points can be ON/OFF set-points or they will define a percentage of the rated output of each micro cogeneration unit in the event that they have an output regulation capacity. The temperature variation of the fluid of the heat storage system, the production of the auxiliary heat production system and the energy dissipated in each time instant of the programming period are also obtained as a result of the algorithm.

A detailed description of the mathematical formulation of the described problem is provided below, specifying the input data and the variables of an algorithm, the target function to be minimized and the constraints of the problem. Two alternative formulations to the same problem are presented, the first of which is based on heuristic methods and the second one using classic optimization techniques.

Depending on the legislation existing in each country relating to incentives received for micro cogeneration units, the features of the interconnection thereof to a network, and as a consequence the strategies following in relation to their electric production ("sale" or "self-consumption"), will vary.

Depending on the country in which the micro cogeneration unit/s is/are installed, the rules regulating their interconnection to the distribution network will be different. These conditions must be met by the micro cogeneration unit/s if they are to be protected under the regulatory framework of the country in question and therefore receive the incentives corresponding to their electric production. Several possible interconnection configurations which are described below are considered in this work.

The optimization method developed is generally enough to be suitable for any of the configuration types described although there are minor particularities:

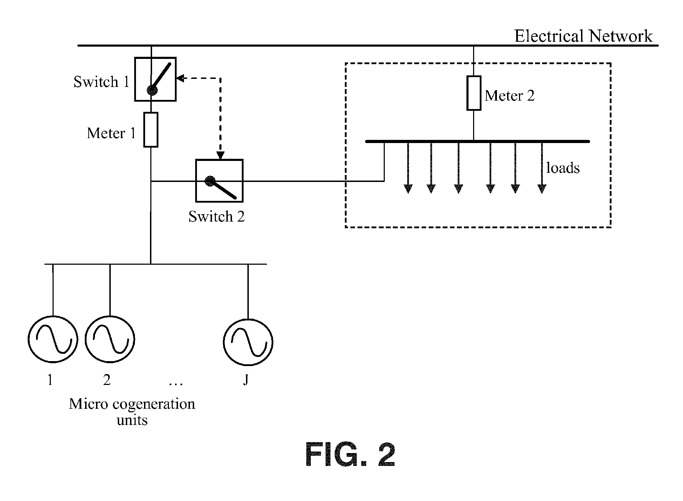

Configuration A (Figure 2)

The micro cogeneration unit/s is/are connected in the interconnection point by means of a dedicated line and a dedicated meter (meter 1) measuring the electrical energy dumped into the distribution network. Furthermore there is a meter 2 measuring the electrical energy imported from the network and which is consumed in the loads. The switches 1 and 2, which will always be in opposite states, are responsible for directing the electricity produced by the micro cogeneration unit/s to the distribution network (closed switch 1 and open switch 2) or to the loads (open switch 1 and closed switch 2) depending on the strategy (sale or self-consumption) that is optimal from the economic point of view in each time instant. However, the electric production should only be directed towards the loads for its self-consumption when the electric demand exceeds the generation, i.e., when it is going to be completely consumed, because if not, the generation surplus would be injected into the electrical network without charging for it, because the meter 2 serves to bill the consumption.

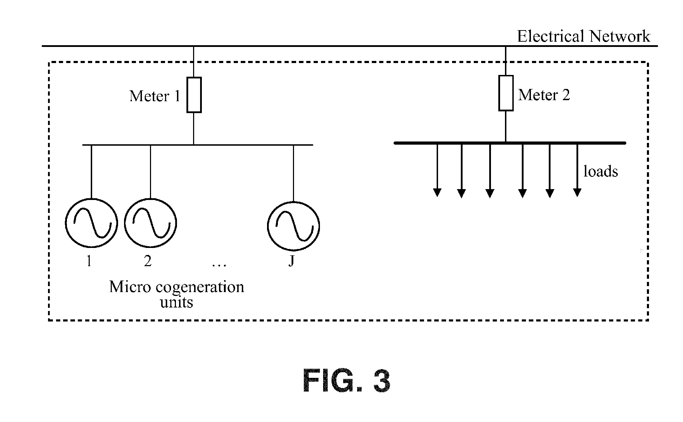

Configuration A2 (Figure 3)

A particular case of configuration A corresponds to the situation in which the switch 1 is always closed and the switch 2 is always open. The diagram in this case can be seen in Figure 3.

According to this configuration, the electric production of the micro cogeneration unit/s is always injected into the network and the electricity demanded by the loads located in the installation is always covered with electrical energy from the electrical network.

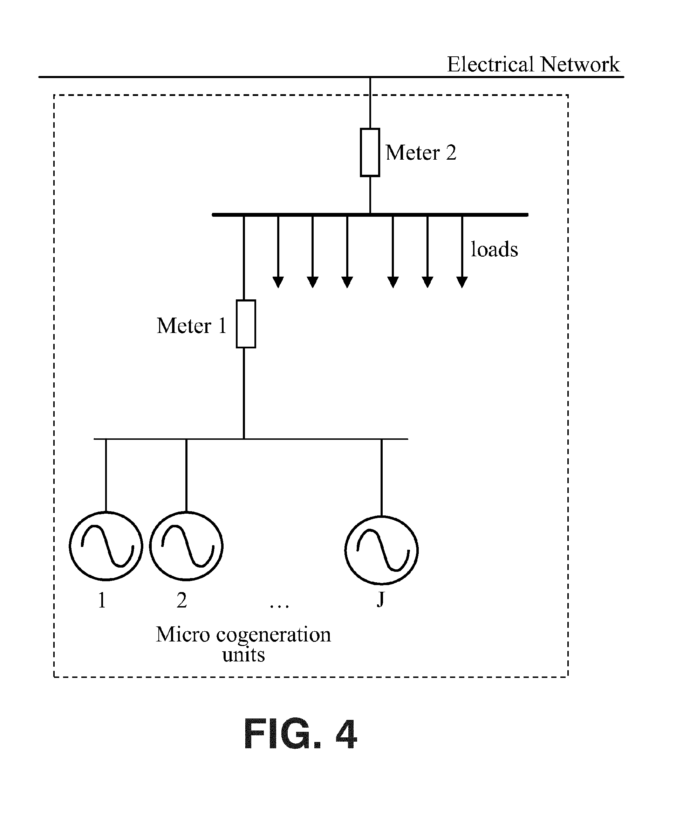

Configuration B (Figure 4)

In this case, the electrical energy produced by the micro cogeneration unit/s is always directed towards the loads where it is self-consumed. When the production exceeds the electric demand, the generation excess is injected into the distribution network. The meter 1 measures the electric production of the micro cogeneration unit/s and the meter 2 measures both the electrical energy which is finally exported to the network in the case in which there is a generation excess and the electrical energy imported from the network when there is a generation defect.

Input data

The following table shows the input data in the algorithm which can be classified in four main groups:

- Equipment data: includes the technical features of the equipment of the installation.
- Price information: includes information relating to the electricity purchase and sale prices, as well as the gas prices.
- Demand forecasting: includes information relating to the heat and electric demand forecasting of the building.
- Simulation data: includes specific information for the simulation which will be performed such as the programming period and the initial conditions which the micro cogeneration unit/s and the heat storage system are in.

| Category | Parameter | Units | Description |
|---|---|---|---|
| Equipment | $P_{chp}^{heat,\,j}$ | kW | Heat output of the micro cogeneration unit j |
| | $P_{chp}^{elect,\,j}$ | kW | Electrical output of the micro cogeneration unit j |
| | $\eta_{chp}^{j}$ | % | Overall efficiency of the micro cogeneration unit j |
| | $Z_{chp}^{min\,On,\,j}$ | min. | Minimum time that the micro cogeneration unit j must be working every time it is connected. |
| | $P_{prodAux}^{heat}$ | kW | Heat output of the auxiliary heat production system |
| | $\eta_{prodAux}$ | % | Heat efficiency of the auxiliary heat production system |
| | $v_{stor}$ | liters | Volume of the heat storage system |
| | $T_{stor}^{max}$ | $\underline{o}$C | Maximum temperature in the heat storage system |
| | $T_{stor}^{min}$ | $\underline{o}$C | Minimum temperature in the heat storage system |
| | $P_{heat\,sink}^{heat}$ | kW | Heat output of the heat sink |
| Prices | $Pr_{z}^{purchElect}$ | €/kWh | Electricity purchase price in the time interval z |
| | $Pr_{z}^{saleElect}$ | €/kWh | Electricity sale price in the time interval z |

(continued)

| Category | Parameter | Units | Description |
|---|---|---|---|
| | $\mathrm{Pr}_z^{gas,j}$ | €/kWh | Price of the gas consumed by the micro cogeneration unit j in the time interval z |
| | $\mathrm{Pr}_z^{gas,prodAux}$ | €/kWh | Price of the gas consumed by the auxiliary heat production system in the time interval z |
| Forecasting | $D_z^{heat}$ | kWh | Heat demand in the time interval z |
| | $D_z^{elect}$ | kWh | Electric demand in the time interval z |
| Simulation | N | | Number of time intervals in the programming period |
| | $\Delta z$ | min. | Duration of the time interval |
| | Periodicity | 0/1 | Periodicity constraint in the heat storage system ($T_{initial}=T_{end}$). If it is worth 1, this constraint is included in the algorithm, if it is worth 0, it is not included. |
| | $T^{initial}$ | ºC | Initial temperature of the fluid in the heat storage system. |
| | $Z_{chp}^{stateInitial,j}$ | min. | Time in minutes the micro cogeneration unit j is on/off at the beginning of the simulation. If the value is positive, it indicates that it has been on for this time. If it is negative, it indicates that it has been off. |
| | $n_{chp}^{maxStart,j}$ | | Maximum number of starts of the micro cogeneration unit allowed in the programming period. |
| | J | | Total number of micro cogeneration units in the installation |

In addition to the preceding data, it is necessary to specific the network interconnection mode. To that end three additional parameters are defined:

| Category | Parameter | Units | Description |
|---|---|---|---|
| Topology | purchase - sale | 0/1 | Binary parameter taking the value 1 if the topology allows purchasing electricity to meet the electric demand and selling the electric production of the micro cogeneration units at the same time |
| | self-consumption-purchase | 0/1 | Binary parameter taking the value 1 if the topology allows self-consuming the electricity produced by the micro cogeneration units and purchasing the electricity needed to cover the electric demand at the same time |
| | self-consumption-sale | 0/1 | Binary parameter taking the value 1 if the topology allows self-consuming the electricity produced by the micro cogeneration units and selling the electricity surplus at the same time |

Taking into account the features of each of the configurations described, the values of the preceding input parameters for each of them will be as follows:

| Configuration | Purcharse-sale | Self-consumption-purchase | self consumption-sale |
|---|---|---|---|
| A | 1 | 1 | 0 |
| A2 | 1 | 0 | 0 |
| B | 0 | 1 | 1 |

## **Preferred embodiment based on heuristic optimization methods**

A preferred embodiment of the invention presents the mathematical formulation of the economic dispatch problem of micro-cogeneration unit/s for heuristic optimization methods. The proposed algorithm is valid both for installations having micro cogeneration units which receive operating set-points ON/OFF (without output regulation) and for those having micro cogeneration units with output regulation capacity. It can also be applied for those in which both types of micro cogeneration units coexist.

There are certain differences in relation to the optimal strategies to be followed with the electric production of the micro cogeneration unit/s depending on the features of the interconnection of said generator/s to the network. Said interconnections affect the combinations allowed or more advantageous combinations between the purchase, sale and self-consumption operations of the electrical energy generated by the latter. The formulation is configurable and general, therefore it covers all the interconnection possibilities and purchase-sale operations.

This formulation must be understood from the perspective of heuristic optimization methods. In these methods, the algorithm itself generates different solutions meeting certain criteria that are not as restrictive and they are evaluated and used to generate new solutions to be evaluated. Heuristic optimization methods do not prove all the solutions but they use heuristics to gradually analyze those which they consider better first. Although they do not assure obtaining the best solution in a specific time, they assure offering a rather good solution in an always acceptable time. The heuristic methods is based on gradually generating and evaluating solutions and according to their values, those which are considered to have more probabilities of being optimal go on to be evaluated.
In computational science, metaheuristics is defined as the computational method which optimizes a problem by trying to evaluate the best solutions first. Metaheuristic methods make some suppositions on how to more quickly reach the best solutions. For example, genetic algorithms take the hypothesis that optimal solutions are reached sooner by combining the best solutions.

The quickest path for reaching the optimal solution can be by passing through an incorrect solution and therefore instead of using constraints, penalizations are used.

With the formulation herein presented, regardless of the method used, it cannot be assured that the best result is going to be obtained in a specific time but the following improvements are achieved:

- Solution: The use of constraints in the target function causes said function to stop being continuous and derivable in its entire domain of definition, which prevents applying many optimization techniques (like the methods based on the decrease of the gradient).
- Weighting: By means of suitably weighting the target functions, it is possible to prioritize certain constraints. The versatility provided by the possibility of particularizing the weight that each target function has allows extending future applications of the component (e.g. future prioritizing of comfort over cost).
- Efficiency: The consideration of a single cost function can cause many regions of the search space to have the same cost value, especially when working with binary variables. The use of a weighted multi-target function reduces the impact of this effect, which allows optimization, directing the search more efficiently in said regions.

### Variables

The variables of the problem can be divided into three groups: decision variables representing the unknown factors of the problem, internal variables used to facilitate calculating the total cost of the problem and penalization variables used to increase the cost of the solutions that do not comply with the constraints of the problem and therefore reduce their quality measurement.

| Category | Variable | Type | Units | Number | Description |
|---|---|---|---|---|---|
| Decision | $x_z^j$ | Real | % | J*N | Operating set-point of the micro cogeneration unit j in the time interval z. For micro cogeneration units with output regulation capacity this variable defines a percentage of its rated output (values of 0.00 to 1.00). For micro cogeneration units without output regulation capacity this variable can only take the values 0 or 1 (OFF/ON) |
| Internal | $Q_z^{prodAux}$ | Real | kWh | N | Heat energy produced by the auxiliary heat production system in the time interval z |
| | $Q_z^{heat\,sink}$ | Real | kWh | N | Heat energy dissipated in the time interval z |
| | $Tp_z^{heat}$ | Real | kWh | N | Total heat production of the micro cogeneration units in the time interval z |
| | $Tp_z^{elect}$ | Real | kWh | N | Total electric production of the micro cogeneration units in the time interval z |
| | $E_z^{total}$ | Real | kWh | N | Heat energy available in the time interval z, which is defined as the sum of the heat energy generated by the micro cogeneration units in said time interval plus that which is stored in the heat storage system in the preceding time interval minus the heat demand corresponding to said time interval. |
| | $E_z^{accumulated}$ | Real | kWh | N | Total heat energy that is stored in the heat storage system in the time interval z |
| | $S_z^{surplusTank}$ | Real | kWh | N | Heat energy that cannot be dissipated in the time interval z |
| | $C_{z,j}^{beenOn}$ | Integer | | N*J | Number of time intervals that the micro cogeneration unit j has been on in the time interval z. |
| | $B_z^{elect}$ | Real | € | N | Total electric profit in the time interval z, i.e., the sum of the electric profits corresponding to all the micro cogeneration units present in the installation. |
| | $S_{z,j}^{start}$ | Binary | 0/1 | N*J | Binary variable taking the value 1 if in the instant z the micro cogeneration unit j just started and 0 otherwise. |

(continued)

| Category | Variable | Type | Units | Number | Description |
|---|---|---|---|---|---|
| | $St_{z,j}^{stop}$ | Binary | 0/1 | N*J | Binary variable taking the value 1 if in the instant z the micro cogeneration unit j just stopped and 0 otherwise. |
| Penalization | $\rho_j^{startsCHP}$ | Integer | | J | Number of starts above or below of the maximum number of starts allowed $n_{chp}^{maxStart,j}$ for the micro cogeneration unit j. |
| | $\rho_j^{durationSt\,artCHP}$ | Integer | | J | Sum of the number of time intervals it takes to reach the minimum time that the micro cogeneration unit j must be working every time it is connected. |
| | $\rho^{heat\,\sigma\iota\nu\kappa}$ | Real | kWh | 1 | Heat energy that will not be able to be dissipated by the heat sink. |
| | $\rho^{empStor}$ | Real | $\underline{o}C$ | 1 | Difference between the temperature in the initial and the end time interval in the heat storage system. |
| | $Pon_j^{starts}$ | Real | | J | The number of starts above or below the maximum number of starts allowed $n_{chp}^{maxStart,j}$ for the micro cogeneration unit j weighted by means of the weights $w_{times\,on}^{more}$ and $w_{times\,on}^{fewer}$ . |

The objective is to optimize the operation of the micro-cogeneration unit/s so that the heat demand of the building is covered with a minimum cost. To that end a heat storage system connected to the micro cogeneration unit/s which stores the heat energy generated through the latter and which is not consumed in the moment. It is thus possible to move forward/delay the commissioning of this/these generator/s to the times of the day in which it is more beneficial from the economic point of view.

The cost function is formulated as the sum of the operating costs of the micro cogeneration units and of the auxiliary heat production system (cost due to the gas burned to generate heat energy). In the case of microgeneration units, there is also a negative cost corresponding to the electric profit obtained for the electricity generated and which is given by $B_z^{elect}$ :

$$\text{Min}\sum_{z=1}^{N}\left[\left(\sum_{j=1}^{J}\left(\frac{(P_{chp}^{heat,j}+P_{chp}^{elect,j})\cdot\Delta z\cdot Pr_z^{gas,j}}{\eta_{chp}^{j}}\cdot x_z^{j}\right)\right)-B_z^{electr}+\frac{Pr_z^{gas,prodAux}}{\eta_{prodAux}}\cdot Q_z^{prodAux}\right] \qquad (1)$$

The electric profit relates to the economic compensation received by the microgeneration unit/s for the electrical energy generated which, depending on the interconnection conditions established by the laws in force as well as the optimal operating criteria followed by the micro cogeneration unit/s, could have two different destinations: "sale" or "self-consumption". In both cases, it will be a negative cost because in the case of "sale", it will be represented by the retribution obtained upon selling the electricity generated and in the case of "self-consumption", by the avoided expense of purchasing electricity to cover the electric demand. It is important to mention that the real electric profit is not obtained by the micro cogeneration units because the cost of purchasing the electricity needed to cover the electric demand of the installation is not taken into account and furthermore the self-consumption of the electricity generated is being considered as a negative purchase cost. It is, therefore, a "fictitious" electric profit which serves to model in a simple and generic manner the electric profit of the micro cogeneration units. The real electric profit could easily be calculated once the optimization algorithm is run.

The expression for calculating the electric profit is as follows:

$$
B_z^{electr} = \begin{cases} Tp_z^{elect} \cdot Pr_z^{purchElect} \; ; \; \text{if} & \begin{cases} (D_z^{elect} \geq Tp_z^{elect}) \\ \wedge \\ (((Pr_z^{saleElect} \geq Pr_z^{purchElect} \\ \wedge \\ \neg(purchase - sale)) \\ \vee \\ (Pr_z^{saleElect} < Pr_z^{purchElect})) \\ \wedge \\ (self - consumptio\;n - purch \end{cases} \\ D_z^{elect} \cdot Pr_z^{purchElect} + (Tp_z^{elect} - D_z^{elect}) \cdot Pr_z^{saleElect} \; ; \text{if} & \begin{cases} (D_z^{elect} < Tp_z^{elect}) \\ \wedge \\ (((Pr_z^{saleElect} \geq Pr_z^{purchElect} \\ \wedge \\ \neg(purchase - sale)) \\ \vee \\ (Pr_z^{saleElect} < Pr_z^{purchElect})) \\ \wedge \\ (self - consumptio\;n - sal \end{cases} \\ Tp_z^{elect} \cdot Pr_z^{saleElect} \; ; & \text{otherwise} \end{cases} \quad (2)
$$

where $Tp_z^{elect}$ is the total electric production of the micro cogeneration unit/s present in the installation and is calculated with the following formula:

$$
Tp_z^{elect} = \sum_{j=1}^{J} (P_{chp}^{elect,j} \cdot \Delta z \cdot X_z^{j}) \quad (3)
$$

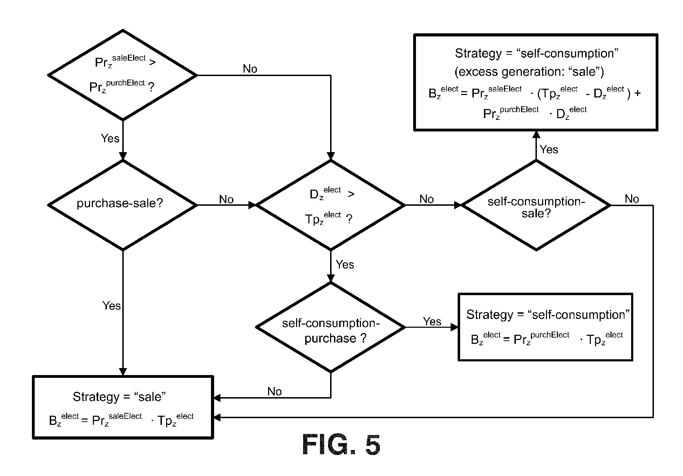

The calculation of the electric profit is generic with respect to the different topologies and is based on the diagram of Figure 5, which defines the optimal strategy for each configuration.

Finally, the heat energy generated by the auxiliary heat production system in the time interval z seen in the equation (1) is calculated with the following formula:

$$
Q_z^{prodAux} = max((D_z^{heat} - Tp_z^{heat} - E_{z-1}^{accumulated}), 0) \quad (4)
$$

As mentioned previously, heuristic methods generate random solutions which must subsequently be evaluated to determine their quality. The target function is defined to carry out this process. This function is related to the cost function but it further includes penalizations for constraint violations committed by the generated solutions. At a lower value of the target function, there is a lower cost and therefore the generated solution is best. The target function for this problem has been formulated as follows:

$$\text{Min}(w_{\text{cost}} \cdot \sum_{z=1}^{N} \left[ \left( \sum_{j=1}^{J} \left( \frac{(P_{\text{chp}}^{\text{heat},j} + P_{\text{chp}}^{\text{elect},j}) \cdot \Delta z \cdot Pr_{z}^{\text{gas},j}}{\eta_{\text{chp}}^{j}} \cdot x_{z}^{j} \right) \right) - B_{z}^{\text{electr}} + \frac{Pr_{z}^{\text{gas,prodAux}}}{\eta_{\text{prodAux}}} \cdot Q_{z}^{\text{prodAux}} \right] +$$

$$\sum_{j=1}^{J} (\text{Wei}_{j}^{\text{starts}}) + w_{\text{notMinimum}} \cdot (\sum_{j=1}^{J} (\rho_{j}^{\text{durationStartCHP}})) + w_{\text{dissipated}} \cdot \rho^{\text{heat sink}} +$$

$$w_{\text{tempStor}} \cdot \rho^{\text{tempStor}} \cdot \text{Periodicity}) \qquad (5)$$

Each penalization is associated with a weight which defines the relative importance of the violation of each constraint with respect to the total. Specifically, the following weights are used:

| Category | Variable | Type | Description |
|---|---|---|---|
| Weight | $w_{\text{times on}}^{\text{more}}$ | Real | Weight for penalizing solutions which exceed the number of times on limit. |
| | $w_{\text{times on}}^{\text{fewer}}$ | Real | Weight for rewarding the solutions which are below the number of times on limit. |
| | $w_{\text{notMinimum}}$ | Real | Weight for penalizing the series of times on which have not complied with the minimum time. |
| | $w_{\text{dissipated}}$ | Real | Weight for penalizing the energy excess in the heat sink. |
| | $w_{\text{tempStor}}$ | Real | Weight for penalizing the difference between the temperature of the fluid in the heat storage system at the beginning and at the end of the programming period (periodicity) |
| | $w_{\text{cost}}$ | Real | Weight for weighting the cost function with respect to penalizations. |

<u>Penalizations</u>

<u>Maximum number of starts</u>

To maximize the life cycle of micro cogeneration units, it is important for each programming period that the micro cogeneration unit is not switched on more than a maximum number of times. The maximum number of times is input datum and will depend on the length of the programming period. It is considered that a micro cogeneration unit j is off if its output is zero and that it is otherwise on. The penalization $\rho_{j}^{\text{startsCHP}}$ corresponding to the micro cogeneration unit j for exceeding the maximum number of times on during the programming period is defined as:

$$\rho_{j}^{\text{startsCHP}} = ((\sum_{z=1}^{N} (A_{z,j}^{\text{start}})) - n_{\text{chp}}^{\text{maxStart},j}) \qquad (6)$$

where the expression defining a start is:

$$A_{1,j}^{start} = \begin{cases} 1 & \text{if } (X_1^j > 0 \wedge Z_{chp}^{stateInitial,j} < 0) \\ 0 & \text{otherwise} \end{cases} \qquad z = 1$$

$$A_{z,j}^{start} = \begin{cases} 1 & \text{if } (X_z^j > 0 \wedge X_{z-1}^j = 0) \\ 0 & \text{otherwise} \end{cases} \qquad z = 2...N \qquad (7)$$

If a micro cogeneration unit has more starts than the maximum of starts allowed, a penalization will be applied and if it has fewer, a reward in the form of reverse penalization will be applied. The reward and the penalization will be given with different weights, the reward weight being much less. A best cost between solutions similar to those having fewer starts is thus given, but it does not compensate for the excess number of starts of a micro cogeneration unit with the lacking number of starts of another. The system is formed by J micro cogeneration units and the penalization for each of them must be calculated. Therefore, the expression which is added to the evaluation function is as follows:

$$\sum_{j=1}^{J} (Wei_j^{starts}) \qquad (8)$$

where:

$$Wei_j^{starts} = \begin{cases} \rho_j^{startsCHP} \cdot w_{times\,on}^{more}; & \text{if} & \rho_j^{startsCHP} > 0) \\ \rho_j^{startsCHP} \cdot w_{times\,on}^{fewer}; & \text{otherwise} \end{cases} \qquad j = 1...J \qquad (9)$$

Minimum working time of the micro-cogeneration unit/s

To maximize the life cycle of the micro cogeneration units, it is important that once the micro cogeneration unit starts, it remains on for a minimum time. These constraints assure that every time it is connected the micro cogeneration unit j remains on for at least one time $Z_{chp}^{min\,On,j}$.

The penalization $\rho_j^{durationStartCHP}$ for not complying with the minimum time which the micro cogeneration unit j must be on is defined as:

$$\rho_j^{durationStartCHP} = \sum_{z=1}^{N} \begin{cases} \dfrac{Z_{chp}^{minOn,j}}{\Delta z} - C_{z,j}^{beenOn}; & \text{if } (St_{z,j}^{stop} = 1 \wedge (C_{z,j}^{beenOn} < \dfrac{Z_{chp}^{minOn,j}}{\Delta z})) \\ 0 & \text{otherwise} \end{cases} \qquad (10)$$

where the expression which counts the number of time intervals that a micro cogeneration unit has been on is defined as:

$$C_{0,j}^{beenOn} = \begin{cases} \dfrac{Z_{chp}^{stateInitial,j}}{\Delta z}; & \text{if} & Z_{chp}^{stateInitial,j} > 0 \\ 0; & \text{otherwise} \end{cases}$$

$$C_{z,j}^{beenOn} = \begin{cases} C_{z-1,j}^{beenOn} + 1; & \text{if } (X_z^j > 0) \\ 0; & \text{otherwise} \end{cases} \qquad z = 1...N \qquad (11)$$

And the following expression defines the off state of a micro cogeneration unit:

$$St_{1,j}^{stop} = \begin{cases} 1 & \text{if} & (X_1^j = 0 \wedge Z_{chp}^{stateInitial,j} > 0) \\ 0 & \text{otherwise} \end{cases} \quad z = 1$$

$$St_{z,j}^{stop} = \begin{cases} 1 & \text{if} & (X_z^j = 0 \wedge X_{z-1}^j > 0) \\ 0 & \text{otherwise} \end{cases} \quad z = 2...N$$

(12)

Since the system is formed by J micro cogeneration units, the penalization for each of them is calculated and multiplied by the weight defined for this penalization. The expression which is added to the target function is as follows:

$$w_{notMinimum} \cdot (\sum_{j=1}^{J} (\rho_j^{durationStartCHP}))$$ (13)

Temperature in heat storage system and dissipated heat

This section includes penalizations against the amount of energy stored in the heat storage system and against the heat energy which is dissipated.

On one hand, it is necessary to assure that the amount of energy that is stored in the heat storage system does not exceed the capacity of the storage system at any time instant, or in other words, the temperature of the fluid is comprised between its minimum and maximum limits for all the time intervals included in the programming period.

On the other hand, it is established that it is only possible to dissipate heat when the heat storage system is at its maximum capacity, i.e., when the temperature of the fluid is at its maximum. Furthermore, the dissipated heat must not exceed the maximum output of the heat sink at any time instant and more energy than what is generated by the micro cogeneration unit/s in each time instant will not be able to be dissipated.

The following penalization takes into account all these aspects:

$$\rho^{heat\,sink} = \sum_{z=1}^{N} S_z^{surplusStor}$$ (14)

where $S_z^{surplusStor}$ is the heat energy which cannot be dissipated in instant z and which is calculated with the formula following:

$$S_z^{surplusStor} = \max((E_z^{total} - P_{heat\,sink}^{heat} \cdot \Delta z - (T_{stor}^{max} - T_{stor}^{min}) \cdot V_{stor} \cdot Cp^{fluid}), 0)$$ (15)

where $Cp^{fluid}$ represents the specific heat of the fluid of the heat storage system. In the case in which such fluid is water, it will take the value $1.16 \cdot 10^{-3} kWh/(°C \cdot 1)$

$E_z^{total}$ is the heat energy available in the time interval z which is calculated as the sum of the heat energy generated by the micro cogeneration unit/s in the time interval z plus what it had stored in the heat storage system in the previous time interval minus the heat energy consumed during the time interval z, i.e., the heat demand in said instant:

$$E_z^{total} = E_{z-1}^{accumulated} - D_z^{heat} + Tp_z^{heat}$$ (16)

The accumulated total energy in the heat storage system in each time interval is calculated with the following expression:

$$E_0^{accumulated} = (T_0 - T_{stor}^{min}) \cdot V_{stor} \cdot Cp^{fluid}; \quad z = 0$$

$$E_z^{accumulated} = \min(E_z^{total}, (T_{stor}^{max} - T_{stor}^{min}) \cdot V_{stor} \cdot Cp^{fluid}); \quad z = 1...N$$

(17)

The total heat production of the micro cogeneration unit/s in the time instant z is calculated with:

$$Tp_z^{heat} = \sum_{j=1}^{J} (P_{chp}^{heat,j} \cdot \Delta z \cdot X_z^j) \qquad (18)$$

The expression which is added to the target function is as follows:

$$w_{dissipated} \cdot \rho^{heat\,sink} \qquad (19)$$

Periodicity of the temperature in the heat storage system

This constraint can optionally be introduced, depending on the value given to the input parameter "periodicity", which is equal to zero or to one for deactivating or activating the constraint respectively. Its purpose is to impose a cyclical condition which assures that the heat storage system is in the same load state at the beginning and at the end of the programming period. The net energy balance exchanged throughout the day is thus nil. This constraint is used when the programming period lasts for a complete cycle, such as an entire day, for example. The penalization corresponding to said constraint is as follows:

$$\rho^{tempStor} = Abs(E_1^{accumulated} - E_N^{accumulated}) \qquad (20)$$

The expression which is added to the target function is as follows:

$$w_{tempStor} \cdot \rho^{tempStor} \qquad (21)$$

Solution

The described problem has been solved using genetic algorithms (GA) as a metaheuristic optimization method. Specifically, genetic algorithms with integer encoding have been used to represent each of the solutions of the problem. The individuals or chromosomes of the GA are made up of genes which represent each of the percentages (is used actually a value multiplied by the maximum number of adjustable values e.g. a micro cogeneration unit with 10 adjustable output positions) whereby each micro cogeneration unit will be graduated in a time interval. The order of the values is defined first by the natural order of the time intervals and then, if there are several micro cogeneration units, their values will gradually settle with the first value of a micro cogeneration unit being placed after the last value of the previous micro cogeneration unit.

For example, for a 2 micro cogeneration unit individual and the programming period being for 1 complete day, the length of the 1-hour time interval hour and the 2 micro cogeneration units allow 100 output positions, it would be:

10 85 1 6 0 0 0 1 1 45 0 1 1 12 13 14 15 3 6 1 1 1 5 3 |
1 1 9 8 7 7 33 7 8 9 5 1 1 5 25 05 0 0 0 0 15 3 45 6

where it is defined that micro cogeneration unit 1 during one day will have output percentages assigned in the following order:

1 0 85 1 6 0 0 0 1 1 45 0 1 1 12 13 14 15 3 6 1 1 1 5 3

and micro cogeneration unit 2:

1 1 9 8 7 7 33 7 8 9 5 1 1 5 25 05 0 0 0 0 15 3 45 6

The possible values for the percentages are randomly defined according to the possibilities offered by the micro cogeneration units but they will always be between 0 and the maximum number of output values allowed by the micro cogeneration unit. If for example a micro cogeneration unit is ON/OFF, it will be defined as only being able to have the values 0 and 1, and if a micro cogeneration unit is completely adjustable with 1000 possible positions it will be defined as being able to have values within the range 0...1000.

The genetic algorithm has been performed using the following configuration of genetic operators:

- Classic mutation operator: randomly selected gene values are switched with also randomly generated values using to that end a mutation probability value;
- One-point crossover operator: the value assigned to the children's genes is inherited from the parents. The selected point determines from after which gene the genes come from one parent or the other;
- Selection operator: the probability of selecting an individual is proportional to its goodness of fit;
- Local Gaussian search operator: changes are made in all the genes of the individual using Gaussian distribution for that purpose.

### Embodiment based on classic optimization techniques

The mathematical formulation of the economic dispatch problem of micro-cogeneration unit/s based on classic optimization techniques is presented in this second embodiment. The proposed algorithm considers that all the micro cogeneration units present in the installation receive operating set-points ON/OFF, i.e., they do not have output regulation capacity.

There are certain differences relating to the optimal strategies to be followed with the electric production of the micro cogeneration unit/s depending on the features of the interconnection of said generator/s to the network. The scenarios considered in the algorithm formulated with classic optimization techniques are as follows:

- Installations with only 1 micro cogeneration unit: configurations A, A2 and B.
- Installations with several micro cogeneration units: configuration A2.

The variables of the problem, the target function to be minimized and the constraints of the problem are described. The differences between one configuration and another affect the calculation of the economic profit obtained by the micro generation unit/s due to the electrical energy generated because in each case it will have a different optimal destination: "sale" or "self-consumption".

From a mathematical point of view, the optimal dispatch of the micro-cogeneration units is a mathematical mixed integer linear programming problem. A difference of the preferred embodiment based on heuristic methods can be solved in exactly the same way using any technique for solving mixed integer linear problems. However, problems of this type have the drawback of being able to have high computational complexity since they include a large number of binary variables and constraints, which can result in the time required for solving them being high for the application to be given to them. This drawback, however, is increasingly less important due to the development that processors and software programs are being subjected to.

### Variables

The variables of the problem can be divided into two groups: decision variables and internal algorithm variables. The former represent the unknown factors of the problem. The latter are auxiliary variables used to facilitate the formulation of the problem. The following table shows a description of each of them:

| Category | Variable | Type | Units | Number | Description |
|---|---|---|---|---|---|
| Decision | $X_z^j$ | Binary | 0/1 | J*N | Operating set-point of the micro cogeneration unit j in the time interval z (ON/OFF). |
| | $T_z$ | Real | $\underline{o}C$ | N+1 | Temperature in the heat storage system in the time interval z |
| | $Q_z^{prodAux}$ | Real | kWh | N | Energy produced by the auxiliary heat production system in the time interval z |
| | $Q_z^{heat\ sink}$ | Real | kWh | N | Energy dissipated in the time interval z |

| Category | Variable | Type | Units | Number | Description |
|---|---|---|---|---|---|
| Internal | $y_z$ | Binary | 0/1 | N | Binary variable defining the possibility of dissipating heat in the time interval z. This is possible if the heat storage system is at its maximum capacity, i.e., if the temperature of the fluid is maximum. |
| | $k_z$ | Binary | 0/1 | N | Binary variable specifying the possibility of the auxiliary heat production system to generate. This is possible if the heat demand exceeds that which can be covered with the micro cogeneration unit-heat storage system assembly. |
| | $r_z^j$ | Binary | 0/1 | J*N | Binary variable which is worth 1 in the time intervals in which the micro cogeneration unit j starts and 0 in the rest. |
| | $s_z^j$ | Binary | 0/1 | J*N | Binary variable which is worth 1 in the time intervals in which the micro cogeneration unit j stops and 0 in the rest. |

It can be seen that there are N+1 temperature variables while there is only N for the rest. This is because the rest of the variables relate to a time interval whereas the temperature variable relates to a specific time.

Before solving the problem, the input data is processed two times, which will result in the values of two new parameters used in the problem: the electric profit of the micro cogeneration unit/s $\left( B_z^{elect,j} \right)$ and the time it takes the micro cogeneration unit/s at the beginning of the simulation period to comply with the minimum working time constraint (L^j).

The first time the electric prices are processed provides the electric profit of the micro cogeneration unit/s $\left( B_z^{elect,j} \right)$ and the second time the micro-cogeneration unit/s are processed, it provides the time it takes the micro cogeneration unit/s at the beginning of the simulation period to comply with the minimum working time ( L^j) constraint. The process followed to calculate each of them is detailed below:

-

Processing the electric prices, the purpose of this processing is to determine the electric profit $B_z^{elect,j}$ obtained by the micro cogeneration unit/s in each time instant. The electric profit relates to the economic compensation that micro cogeneration unit/s receive for the electrical energy generated which, depending on the interconnection conditions established by the laws in force as well as the optimal operating criteria followed by the micro cogeneration unit/s, could have two different destinations: "sale" or "self-consumption". In both cases, it will be a negative cost negative because in the case of "sale", it will be represented by the retribution obtained upon selling the electricity generated and in the case of "self-consumption", by the avoided expense of purchasing electricity to cover the electric demand. It is important to mention that it is not the real electric profit obtained by the micro cogeneration units because the cost of purchasing the electricity needed to cover the electric demand of the installation is not taken into account and furthermore the self-consumption of the electricity generated is being considered as a negative purchase cost. It is, therefore, a "fictitious" electric profit which serves to model in a simple and generic manner the electric profit of the micro cogeneration units. The real electric profit could easily be calculated once the optimization algorithm is run.

This section specifies the optimal strategy to be followed by the micro cogeneration unit/s relating to the electrical energy generated and the electric profit obtained for the described interconnection configurations to the network.

Installations with a single micro cogeneration unit

Configuration A

The electricity purchase and sale prices for each time interval are compared. If the sale price is greater than the purchase price, it is sold. The electric profit in this case is given by the product of the electric production of the micro cogeneration unit multiplied by the sale price:

$$B_z^{elect} = Pr_z^{saleElectr} \cdot P_{chp}^{elect} \cdot \Delta z; \qquad z = 1...N \qquad (22)$$

If the sale price is less than the purchase price, it is self-consumed. Due to the features of the installation, the possibility of consuming part of the electricity generated and selling the rest is not contemplated. The electrical energy generated by the micro cogeneration unit will only be allowed to be self-consumed if the electric demand in that instant is greater than the electric generation of the micro cogeneration unit. Otherwise, it will be sold. The electric profit in the case of self-consumption is represented by the avoided expense of purchasing electricity to cover the electric demand given by the following equation:

$$B_z^{electr} = Pr_z^{purchElectr} \cdot P_{chp}^{elect} \cdot \Delta z; \qquad z = 1...N \qquad (23)$$

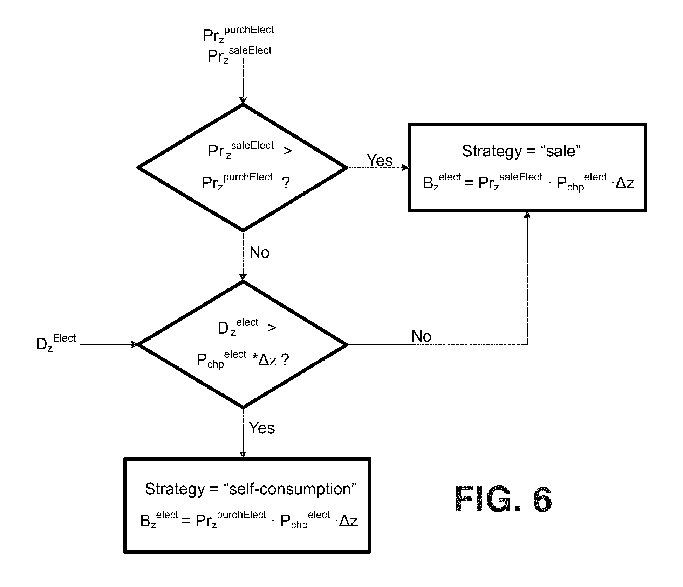

The diagram of Figure 6 shows the steps of this process which is repeated for each time interval of the period considered.

Configuration A2

In configuration A2, the electrical energy generated by the micro cogeneration unit is always sold. In this case it is not necessary to pre-process as in the previous case because the electric profit will always be given by the equation (1).

Configuration B

In this configuration all the electrical energy generated is self-consumed in the installation. However, there is the possibility of selling the electricity surplus in the case in which the generation exceeds the demand.

When the electric demand is greater than the generation, the electric profit is given by the avoided expense of purchasing the electricity generated:

$$= Pr_z^{purchElectr} \cdot P_{chp}^{elect} \cdot \Delta z; \qquad z = 1...N$$

When the electric demand is less than the generation, the electric profit is given by the sum of the avoided expense of purchasing electricity to cover the electric demand plus the retribution obtained by the sale of the surplus electricity:

$$= Pr_z^{saleElectr} \cdot (P_{chp}^{elect} \cdot \Delta z - D_z^{elect}) + Pr_z^{purchElect} \cdot D_z^{elect}; \qquad z = 1...N$$

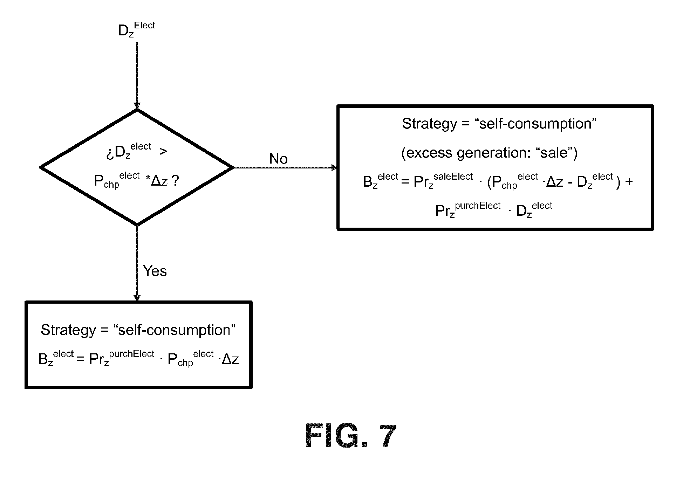

The flow chart of Figure 7 shows the process followed.

Installations with several micro cogeneration units

In the case of installations with several micro-cogeneration units, only configuration A2 is considered, in which all the electrical energy generated by the micro cogeneration units is injected into the network and the electrical energy demanded by the loads is purchased from the electrical network. Therefore, there is no pre-processing and the electric profit obtained by each individual micro cogeneration unit j will be given by the following equation:

$$= Pr_z^{saleElectr} \cdot P_{chp}^{elect,j} \cdot \Delta z; \qquad z = 1...N; \qquad j = 1...J$$

- Processing the micro-cogeneration unit/so The purpose of this process is to determine the state of the micro cogeneration unit/s at the beginning of the simulation (ON/OFF) and in the event that it/they is/are connected, the time it takes it/them to comply with the corresponding minimum working time constraint(s).

To that end the constant $L^j$ is defined, which is representative of the time it takes the micro cogeneration unit j to comply with the mentioned constraint and which is calculated for each of the micro cogeneration units as follows:

$$L^j = Min[N, (Z_{chp}^{'minOn,j} - Z_{chp}^{'stateInitial,j}) \cdot x_0^j]; \qquad j = 1...J \quad (27)$$

where:

N      number of time intervals in the planning period

$Z_{chp}^{'minOn,j}$     minimum time that the micro cogeneration unit j must be working expressed in number of time intervals. It is calculated with the following formula:

$$Z_{chp}^{'minOn,j}(time - steps) = \frac{Z_{chp}^{minOn,j}(min.)}{\Delta z(min.)} \quad (28)$$

$Z_{chp}^{'stateInitial,j}$     time it takes the micro cogeneration unit j on/off at the beginning of the simulation expressed in number of time intervals. It is calculated with the following formula:

$$Z_{chp}^{'stateInitial,j}(time - steps) = \frac{Z_{chp}^{stateInitial,j}(min.)}{\Delta z(min.)} \quad (29)$$

$x_0^j$     initial state of the micro cogeneration unit j (ON/OFF). If:

$$\begin{aligned} Z_{chp}^{stateInitial,j} > 0 &\rightarrow x_0^j = 1 \qquad (ON) \\ Z_{chp}^{stateInitial,j} < 0 &\rightarrow x_0^j = 0 \qquad (OFF) \end{aligned} \quad (30)$$

The results of $L^j$ can be positive ($\geq 1$), negative or nil. It is positive when the micro cogeneration unit j has been coupled for less time than that imposed by the  minimum working time constraint. It is negative when it exceeds the beginning the minimum working time. And it is nil when it was off at the beginning of the planning period.

This constant will subsequently be used to define the number and type of constraints that must be included in the algorithm relating to the minimum working time of the micro cogeneration unit (see section 0).

Example: The micro cogeneration unit j has been connected at the beginning of the simulation period for less time than the minimum working time, so during the first hours of the programming period it must remain coupled until complying with said constraint.

Data: N=48 time intervals, $\Delta z$=30 min., $Z_{chp}^{minOn,j} = 120min.$, $Z_{chp}^{stateInitial,j} = 60min. \rightarrow x_0^j = 1$

Result: $L^j$ = Min(48,(120/30-60/30)·1)=Min(48,2)=2, the micro cogeneration unit j must remain connected for two more time intervals, i.e., for 1 hour.

The purpose of the method of the invention is to optimize the operation of the micro-cogeneration unit/s so that the energy demand of the building is covered with a minimum cost. To that end, a heat storage system is connected to the micro cogeneration unit/s which stores the heat energy generated by the latter and which is not consumed at that time. It is thus possible to move forward/delay the commissioning of this/these generator/s at the times of day when it is most profitable from the economic point of view. These times will be these in which the electric profit $\left( B_z^{elect,j} \right)$ is greater.

The target function is formulated as the sum of the operating costs of the micro cogeneration units and of the auxiliary heat production system (cost due to the gas burned to generate heat energy). In the case of the micro cogeneration units, there is also a negative cost corresponding to the electric profit obtained by each of them for the electricity generated and which is given by $B_z^{elect,j}$. The target function for the mentioned scenarios and the case of using classic optimization techniques is formulated as follows:

$$\text{Min} \sum_{z=1}^{N} \left[ \left( \sum_{j=1}^{J} \left( \frac{(P_{\text{chp}}^{\text{heat,j}} + P_{\text{chp}}^{\text{elect,j}}) \cdot \Delta z \cdot \text{Pr}_z^{\text{gas,j}}}{\eta_{\text{chp}}^j} - B_z^{\text{elect,j}} \right) \cdot x_z^j \right) + \frac{\text{Pr}_z^{\text{gas,prodAux}}}{\eta_{\text{prodAux}}} \cdot Q_z^{\text{prodAux}} \right] \qquad (31)$$

The constraints imposed on the optimization problem are described below.

Heat balance

Taking into account the diagram of Figure 1, the following heat balance in the heat storage system for the time instant z can be considered:

Variation heat energy stored$_z$ = Heat production CHPs$_z$ - Dissipated heat$_z$-Consumed heat energy of the storage$_z$

wherein:

Consumed heat energy of the storage$_z$ = Heat demand$_z$ - Auxiliary heat production system$_z$

which, when formulated depending on the variables of the problem, is as follows:

$$Cp^{\text{fluid}} \cdot v_{\text{stor}} (T_{z+1} - T_z) = (\sum_{j=1}^{J} P_{\text{chp}}^{\text{heat,j}} \cdot \Delta z \cdot x_z^j) - Q_z^{\text{heat sink}} - D_z^{\text{heat}} + Q_z^{\text{prodAux}}; \quad z = 1...N \qquad (32)$$

where $Cp^{\text{fluid}}$ represents the specific heat of the fluid of the heat storage system. In the case in which the fluid is water, it takes the value $1.16 \cdot 10^{-3}$kWh/(°C·1).

This constraint must be complied with for all the time intervals included in the planning period.

Temperature in the heat storage system

Initial temperature

The initial temperature in the heat storage system is datum, therefore the following constraint can be applied:

$$T_1 = T^{\text{initial}} \qquad (33)$$

Periodicity

This constraint is optional depending on the value given to the input parameter "periodicity". Its purpose is to impose a cyclical condition which assures that the heat storage system is in the same load state at the beginning and at the end of the programming period. The net energy balance exchanged throughout the day is thus nil. This constraint is used when the programming period lasts for a complete cycle, such as an entire day, for example.

$$T_1 = T_{N+1} \qquad (34)$$

Temperature limits

The temperature in the heat storage system in all the time instants within the programming period must be comprised between its minimum and maximum limits.

$$T_{\text{stor}}^{\text{min}} \leq T_z \leq T_{\text{stor}}^{\text{max}}; \quad z = 1...N+1 \qquad (35)$$

Production of the auxiliary heat production system

Production limit

The production of the auxiliary heat production system cannot exceed it maximum output at any time instant:

$$0 \le Q_z^{prodAux} \le P_{prodAux}^{heat} \cdot \Delta z; \quad z = 1...N \quad (36)$$

Generation set-point

The function of the auxiliary heat production system is to cover heat demand peaks, i.e., it only starts to work when the micro cogeneration unit/s plus heat storage system assembly is not able to supply the heat demanded by the system.

Therefore the following conditions must be met:

a) if the heat demand is less than the generation of the micro-cogeneration unit/s plus the energy stored in the heat storage system, the production of the auxiliary heat production system is zero.

b) If the heat demand is greater than the generation of the micro-cogeneration unit/s plus the energy stored in the heat storage system, the production of the auxiliary heat production system will be equal to the demand that cannot be covered by the latter.

Once formulated, it is as follows:

$$\begin{cases} if \quad D_z^{heat} \le (\sum_{j=1}^{J} P_{chp}^{heat,j} \cdot \Delta z \cdot x_z^j) + Cp^{fluid} \cdot v_{stor} \cdot (T_z - T_{stor}^{min}) \to Q_z^{prodAux} = 0; \quad z = 1...N \\ \\ if \quad D_z^{heat} > (\sum_{j=1}^{J} P_{chp}^{heat,j} \cdot \Delta z \cdot x_z^j) + Cp^{fluid} \cdot v_{stor} \cdot (T_z - T_{stor}^{min}) \to Q_z^{prodAux} = D_z^{heat} - \\ \\ \quad -(\sum_{j=1}^{J} P_{chp}^{heat,j} \cdot \Delta z \cdot x_z^j) - Cp^{fluid} \cdot v_{stor} \cdot (T_z - T_{stor}^{min}); \quad z = 1..N \end{cases} \quad (37)$$

To model these conditional constraints, an auxiliary binary variable $k_z$ is used which will be worth 1 when the auxiliary heat production system can generate because the heat demand is greater than the generation of the micro cogeneration units plus the heat storage system and 0 otherwise. This variable will cancel out constraints depending on if they must or must not be imposed. The resulting constraints are as follows:

$$D_z^{heat} \le (\sum_{j=1}^{J} P_{chp}^{heat,j} \cdot \Delta z \cdot x_z^j) + Cp^{fluid} \cdot v_{stor} \cdot T_z - Cp^{fluid} \cdot v_{stor} \cdot T_{stor}^{min} + N_1 \cdot k_z; \quad z = 1...N$$

$$-D_z^{heat} < -(\sum_{j=1}^{J} P_{chp}^{heat,j} \cdot \Delta z \cdot x_z^j) - Cp^{fluid} \cdot v_{stor} \cdot T_z + Cp^{fluid} \cdot v_{stor} \cdot T_{stor}^{min} + N_2 \cdot (1 - k_z); \quad z = 1...N$$

$$Q_z^{prodAux} \le 0 + N_3 \cdot k_z; \quad z = 1...N \qquad (38)$$

$$Q_z^{prodAux} \le D_z^{heat} - (\sum_{j=1}^{J} P_{chp}^{heat,j} \cdot \Delta z \cdot x_z^j) - Cp^{fluid} \cdot v_{stor} \cdot T_z + Cp^{fluid} \cdot v_{stor} \cdot T_{stor}^{min} + N_4 \cdot (1 - k_z); z = 1...N$$

where N1, N2, N3 and N4 represent sufficiency large value constants. It can be observed that depending on $k_z$ being worth 0 or 1, the first and the third constraints or the second and the fourth constraints will be imposed, respectively.

Dissipated heat

Dissipated heat limit

The amount of dissipated heat must not exceed the maximum output of the heat sink at any time instant:

$$0 \le Q_z^{\text{heat sink}} \le P_{\text{heat sink}}^{\text{heat}} \cdot \Delta z; \quad z = 1...N \quad (39)$$

The constraint of the dissipated heat in each time instant not being allowed to exceed the energy generated by the micro cogeneration unit/s in said instant is also imposed, i.e.:

$$0 \le Q_z^{\text{heat sink}} \le \sum_{j=1}^{J} P_{\text{chp}}^{\text{heat},j} \cdot \Delta z \cdot x_z^j; \quad z = 1...N \quad (40)$$

As can be seen, the constraints (18) and (19) represent two maximum limits for the dissipated heat. The most restrictive of the two will be in effect in each time instant.

Possibility of dissipating heat

Heat can only be dissipated when the heat storage system is at its maximum capacity, i.e., when the temperature of the fluid is at the maximum temperature.
Therefore the following conditions must be met:

a) if the temperature in the heat storage system is less than the maximum temperature, the dissipated heat is nil.
b) if the temperature in the heat storage system is equal to the maximum temperature, the dissipated heat can range between 0 and the maximum output of the heat sink.

Once formulated, it is as follows:

$$\begin{cases} \text{if} \quad T_{z+1} < T_{\text{stor}}^{\text{max}} \to Q_z^{\text{heat sink}} = 0; \quad z = 1...N \\ \text{if} \quad T_{z+1} = T_{\text{stor}}^{\text{max}} \to 0 \le Q_z^{\text{heat sink}} \le P_{\text{heat sink}}^{\text{heat}} \cdot \Delta z; \quad z = 1..N \end{cases} \quad (41)$$

To model these conditional constraints, the binary variable $y_z$ is used, which will define whether it is possible to release heat ($y_z$=0) or not ($y_z$=1) depending on the temperature in the heat storage system. The resulting constraints are:

$$-T_{z+1} \le -T_{\text{stor}}^{\text{max}} + M_1 \cdot y_z; \quad z = 1...N$$
$$T_{z+1} < T_{\text{stor}}^{\text{max}} + M_2 \cdot (1-y_z); \quad z = 1...N$$
$$Q_z^{\text{heat sink}} \le P_{\text{heat sink}}^{\text{heat}} \cdot \Delta z + M_3 \cdot y_z; \quad z = 1...N$$
$$Q_z^{\text{heat sink}} \le 0 + M_4 \cdot (1-y_z); \quad z = 1...N$$

$$(42)$$

where M1, M2, M3 and M4 represent sufficiency large value constants. It can be observed that depending on $y_z$ being worth 0 or 1, the first and the third constraints or the second and the fourth constraints will be imposed, respectively.

Minimum working time of the micro-cogeneration unit/s

These constraints assure that every time it is connected, the micro cogeneration unit j remains connected for at least $Z_{\text{chp}}^{\text{'minOn},j}$ time intervals.
To that end, the constraints are divided into three groups: those corresponding to the initial time intervals, to the intermediate time intervals and to the end time intervals.

Initial time intervals

This constraint is only imposed if $L^j \geq 1$, i.e., if the micro cogeneration unit j was already connected before the programming period but the time it has been operating is less than the required minimum. This means that it will have to be forced to continue in the ON state until said time period has ended. It must further comply with $L^j \leq N$ since the constraints to be imposed would otherwise be those corresponding to the end time intervals.
To that end the following constraint is imposed:

$$\sum_{z=1}^{L^j}(1-x_z^j)=0; \quad j=1...J \quad (43)$$

which, once developed, is:

$$(1-x_1^j)+(1-x_2^j)+...+(1-x_{L^j}^j)=0 \rightarrow -x_1^j-x_2^j-...-x_{L^j}^j=-L^j \quad (44)$$

If, for example $L^j=3$, i.e., the micro cogeneration unit j still has 3 time intervals to comply with the minimum working time, this constraint would be developed as follows:

$$-x_1^j-x_2^j-x_3^j=-3 \rightarrow x_1^j=x_2^j=x_3^j=1 \quad (45)$$

In other words, the micro cogeneration unit j is forced to remain in the ON state for the first three time intervals.
A constraint is imposed for each micro cogeneration unit, therefore, the total number of constraints of this type is J.

Intermediate time intervals

These constraints assure compliance with the minimum working time for all the possible sets of consecutive hours with a size equal to the minimum working time.

$$\sum_{i=z}^{z+Z_{chp}^{'minOn,j}-1}x_i^j \geq Z_{chp}^{'minOn,j} \cdot r_z^j; \quad z=L^j+1...N-Z_{chp}^{'minOn,j}+1; \quad j=1...J \quad (46)$$

The total number of constraints of this type is $\sum_{j=1}^{J}(N-Z_{chp}^{'minOn,j}-L^j+1)$ and they are only included for the micro cogeneration unit j if the following condition is met: $(L^j+1 < N-Z_{chp}^{'minOn,j}+1)$. Furthermore, they are only defined for positive values of z.

It can be seen that the binary variable $r_z^j$ has been used taking the value 1 in the time intervals in which the micro cogeneration unit j is connected and 0 in the rest.

Example: N=24, $Z_{chp}^{'minOn,j}=4$, $L^j=3$

The number of constraints for the micro cogeneration unit j will be: 24-4-3+1=18 (z=4...21).

$$\begin{cases} z=4 \rightarrow (x_4^j+x_5^j+x_6^j+x_7^j) \geq Z_{chp}^{'minOn,j} \cdot r_4^j \\ z=5 \rightarrow (x_5^j+x_6^j+x_7^j+x_8^j) \geq Z_{chp}^{'minOn,j} \cdot r_5^j \\ ... \\ z=21 \rightarrow (x_{21}^j+x_{22}^j+x_{23}^j+x_{24}^j) \geq Z_{chp}^{'minOn,j} \cdot r_{21}^j \end{cases} \quad (47)$$

In the solution of the algorithm, these constraints are activated only if the micro cogeneration unit j starts in that time interval. In the previous example:

a) if the micro cogeneration unit j starts in $z=4$ : $x_4^j + x_5^j + x_6^j + x_7^j \geq 4 \cdot 1$, and therefore necessarily $x_4^j = x_5^j = x_6^j = x_7^j = 1$, i.e., the micro cogeneration unit j must remain on in those time intervals.

b) if the micro cogeneration unit j does not start in z=4: $x_4^j + x_5^j + x_6^j + x_7^j \geq 4 \cdot 0 \rightarrow x_4^j + x_5^j + x_6^j + x_7^j \geq 0$, therefore the operating set-points of the micro cogeneration unit j in those time intervals can be worth 0 or 1 (they are not restricted)

End time intervals

These constraints are applied in the final hours of the programming period in which there is not a number of consecutive hours equal to the minimum working time.

$$\sum_{i=z}^{N}(x_i^j - r_z^j) \geq 0; \quad z = N - Z_{chp}^{'minOn,j} + 2...N; \quad j = 1...J \quad (48)$$

Positive z values are imposed for each micro cogeneration unit j and if the following condition is met:

$$(N - Z_{chp}^{'minOn,j} + 2 < N)$$

The total number of constraints of this type is $\sum_{j=1}^{J}(Z_{chp}^{'minOn,j} - 1)$.

Example: N=24, $Z_{chp}^{'minOn,j} = 4$

There are (4-1)= 3 constraints, which will be the following:

$$\begin{cases} z = 22 \rightarrow (x_{22}^j - r_{22}^j) + (x_{23}^j - r_{22}^j) + (x_{24}^j - r_{22}^j) \geq 0 \\ z = 23 \rightarrow (x_{23}^j - r_{23}^j) + (x_{24}^j - r_{23}^j) \geq 0 \\ z = 24 \rightarrow (x_{24}^j - r_{24}^j) \geq 0 \end{cases} \quad (49)$$

a) If the micro cogeneration unit j starts in z=22: $(x_{22}^j - 1) + (x_{23}^j - 1) + (x_{24}^j - 1) \geq 0 \rightarrow x_{22}^j + x_{23}^j + x_{24}^j \geq 3$, therefore necessarily: $x_{22}^j = x_{23}^j = x_{24}^j = 1$, i.e., it will also have to remain started in the time intervals z=23 and z=24.

b) If the micro cogeneration unit j does not start in z=22: $(x_{22}^j - 0) + (x_{23}^j - 0) + (x_{24}^j - 0) \geq 0 \rightarrow x_{22}^j + x_{23}^j + x_{24}^j \geq 0$. Therefore the operating set-points of the micro cogeneration unit j in those time intervals can be worth 0 or 1 (they are not restricted).

Logic of the starts

The following constraints have the purpose of giving value to the binary start variable $(r_z^j)$ and stop variable

$\left( s_z^j \right)$ of the micro cogeneration unit j such that they only take the value 1 when it starts or stops, respectively, and the value 0 in the rest of the time intervals. It is also assured that both of them do not take the value 1 simultaneously because in that case, it would mean that the micro cogeneration unit j has started and stopped in the same time instant, a situation which is not possible.

The following constraint is considered for the first time interval:

$$r_1^j - s_1^j = x_1^j - x_0^j; \quad j = 1...J \qquad (50)$$

The following constraints are considered from the second time interval:

$$r_z^j - s_z^j = x_z^j - x_{z-1}^j; \quad z = 2...N; \quad j = 1...J \quad (51)$$

Finally, the following constraint assures that the micro cogeneration unit j does not start and stop in the same time interval, i.e., that $r_z^j$ and $s_z^j$ do not take the value 1 in the same time interval.

$$r_z^j + s_z^j \leq 1; \quad z = 1...N; \quad j = 1...J \quad (52)$$

Only one of the two can thus be worth 1.

Maximum number of starts of the micro-cogeneration unit/s

For the purpose of assuring the reliability of the micro cogeneration unit j, there is the possibility of restricting the number of starts occurring during the programming period below a given maximum value. To that end, the following constraint is imposed for each micro cogeneration unit:

$$\sum_{z=1}^{N} r_z^j \leq n_{chp}^{maxStart,j}; \quad j = 1...J \qquad (53)$$

Binary variables

The following binary variables which can only take the values 0 or 1 are defined in the problem.
Operating set-point of the micro cogeneration unit j

$$0 \leq x_z^j \leq 1; \quad z = 1...N; \quad j = 1...J \qquad (54)$$

Possibility of dissipating heat:

$$0 \leq y_z \leq 1; \quad z = 1...N \qquad (55)$$

Possibility of the auxiliary heat production system to generate:

$$0 \leq k_z \leq 1; \quad z = 1...N \qquad (56)$$

Micro cogeneration unit start control:

$$0 \leq r_z^j \leq 1; \quad z = 1...N; \quad j = 1...J \qquad (57)$$

Micro cogeneration unit stop control:

$$0 \le s_z^j \le 1; \quad z = 1...N; \quad j = 1...J \qquad (58)$$

Solution

The problem described corresponds to a mixed integer linear optimization problem since it simultaneously includes integer and real variables. More specifically, it is a binary integer linear problem since all the integer variables included comply with the particularity of being binary.

The general formulation of a problem of this type is as follows:

$$\begin{array}{ll} \text{Min} & f^T x \\ \text{subject to} & \begin{cases} A \cdot x \le b \\ A_{eq} \cdot x = b_{eq} \\ v_{lb} \le x \le v_{ub} \end{cases} \end{array} \qquad (59)$$

where

f      vector containing the coefficients of the variables of the target function

A     matrix containing the coefficients of the variables of the inequality constraints

b     vector containing the independent terms of the inequality constraints

$A_{eq}$   matrix containing the coefficients of the variables of the equality constraints

$B_{eq}$   vector containing the independent terms of the equality constraints

$V_{lb}$    vector containing the lower limit of the variables

$V_{ub}$   vector containing the upper limit of the variables

x     vector of binary and real variables

In this text, the word "comprises" and variants thereof (such as "comprising", etc) must not be interpreted in an excluding manner, i.e., they do not exclude the possibility that what has been described can include other elements, steps, etc.

Some preferred embodiments of the invention are described in the dependent claims included below.

**Claims**

**1.** Method for controlling the operation of at least one micro cogeneration unit which is part of a system for producing energy also comprising an auxiliary heat production system and a heat storage system, said method optimizes the operation of the at least one micro cogeneration unit according to economic criteria, the method being **characterized in that** it comprises the following steps:

    - obtaining input data which technically characterize the system and are defined below:

$P_{chp}^{heat,j}$ = heat output of the micro cogeneration unit j;

$P_{chp}^{elect,j}$ = electrical output of the micro cogeneration unit j;

$\Delta z$ = duration of a time interval z;

$Pr_z^{gas,j}$ = price of the gas consumed by the micro cogeneration unit j in a time interval z;

$\eta_{chp}^j$ = overall efficiency of the micro cogeneration unit j;

$Pr_z^{gas,prodAux}$ = price of the gas consumed by the auxiliary heat production system in a time interval z;

$\eta_{prodAux}$ = heat efficiency of the auxiliary heat production system;

N = number of time intervals in the period considered;

J = total number of micro cogeneration units in the system;

- defining the value of parameters or weights which penalize the violation of constraints on the maximum number of starts of the at least one micro cogeneration unit, on the minimum working time period of the at least one micro cogeneration unit and on the temperature in the heat storage system and on the dissipated heat in the heat sink:

$w_{cost}$ = weight which weights the cost;

$w_{notMinimum}$ = weight which penalizes the violation of a minimum on time;

$w_{dissipated}$ = weight which penalizes an energy excess in a heat sink part of the system;

$w_{tempstore}$ = weight which penalizes the difference between the temperature of a fluid in the heat storage system at the beginning and at the end of the programming period;

$w_{times\ on}^{more}$ = weight which penalizes exceeding the number of times on limit.

$w_{times\ on}^{fewer}$ = weight which rewards not exceeding the number of times on limit.

- obtaining from the defined input data and weights a value of a variable $x_z^j$ which minimizes the following function:

$$Min(w_{cost} \cdot \sum_{z=1}^{N} \left[ \left( \sum_{j=1}^{J} \left( \frac{(P_{chp}^{heat,j} + P_{chp}^{elect,j}) \cdot \Delta z \cdot Pr_z^{gas,j}}{\eta_{chp}^j} \cdot x_z^j \right) \right) - B_z^{electr} + \frac{Pr_z^{gas,prodAux}}{\eta_{prodAux}} \cdot Q_z^{prodAux} \right] +$$

$$\sum_{j=1}^{J} (Wei_j^{starts}) + w_{notMinimum} \cdot (\sum_{j=1}^{J} (\rho_j^{durationStartCHP})) + w_{dissipated} \cdot \rho^{heat\ sink} +$$

$$w_{tempStor} \cdot \rho^{tempStor} \cdot Periodicity)$$

where:

$x_z^j$ is the operating set-point of the micro cogeneration unit j in a time interval z,

$x_z^j$ takes values between zero and one;

$Q_z^{prodAux}$ = heat energy produced by the auxiliary heat production system in a time interval z;

$Pon_j^{starts}$ = number of starts above or below the maximum number of starts allowed for a micro cogeneration unit j weighted by weights;

$\rho_j^{durationStartCHP}$ = sum of the number of time intervals it takes to reach the minimum time that the micro cogeneration unit j must be working every time it is connected;

$\rho^{heat\ sin\ k}$ = heat energy which cannot be dissipated by the heat sink;

$\rho^{tempStor}$ = difference between the temperature in the initial time interval and the end time interval in the heat storage system.

*Periodicity* = controls the penalization on the temperature in the heat storage system at the beginning and at the end of a period taking the values zero or one to deactivate or activate said penalization;

$B_z^{elect}$ = total electric profit in a time interval z, it is calculated as the sum of the electric profits corresponding to all the micro cogeneration units present in the installation depending on economic criteria;

- controlling the operation of the at least one micro cogeneration unit during the time interval z from the value obtained for the variable $x_z^j$, such that if said value is equal to zero the micro cogeneration unit switches off and if it is equal to one the micro cogeneration unit switches on at maximum output during the time interval z.

2. Method according claim 1, wherein the at least one micro cogeneration unit is interconnected with a building and a distribution network such that the electrical energy it produces is directed either towards said distribution network or towards the building for its self-consumption depending on the electricity purchase and sale prices and the topology of the interconnection between the at least one micro cogeneration unit and the distribution network, the electric profit is thus calculated in the event that 3 conditions are met: the electric demand of the building is greater than or equal to the electric production of the at least one micro cogeneration unit; the electricity sale price is greater than or equal to the electricity purchase price and the topology of the interconnection between the at least one micro cogeneration unit and the distribution network does not allow purchasing and selling electricity at the same time, or the electricity sale price is less than the electricity purchase price; and the topology of the interconnection between the at least one micro cogeneration unit and the distribution network allows self-consuming the electricity produced by the at least one micro cogeneration unit and purchasing the electrical energy it takes to cover the electric demand of the building; if these 3 conditions are met the electric profit is defined as: $Tp_z^{elect} \cdot \mathrm{Pr}_z^{purchElect}$; whereas:

$Tp_z^{elect}$ = electric production of the at least one micro cogeneration unit in a time interval z;

$\mathrm{Pr}_z^{purchElect}$ = electricity purchase price in the time interval z;

3. Method according claim 2, wherein the at least one micro cogeneration unit is interconnected with a building and a distribution network such that the electrical energy it produces is directed either towards said distribution network or towards the building for its self-consumption depending on the electricity purchase and sale prices and the topology of the interconnection between the at least one micro cogeneration unit and the distribution network, the electric profit is thus calculated in the event that 3 conditions are met: the electric demand of the building is less than the electric production of the at least one micro cogeneration unit; the electricity sale price is greater than or equal to the electricity purchase price and the topology of the interconnection between the at least one micro cogeneration unit and the distribution network does not allow purchasing and selling electricity at the same time, or the electricity sale price is less than the electricity purchase price; and the topology of the interconnection between the at least one micro cogeneration unit and the distribution network allows self-consuming the electricity produced by the at least one micro cogeneration unit and selling the surplus electrical energy after covering the electric demand of the building; if these 3 conditions are met the electric profit is defined as $D_z^{elect} \cdot \mathrm{Pr}_z^{purchElect} + (Tp_z^{elect} - D_z^{elect}) \cdot \mathrm{Pr}_z^{saleElect}$; whereas:

$\mathrm{D}_z^{elect}$ = electric demand of the building in the time interval z

$Tp_z^{elect}$ = electric production of the at least one micro cogeneration unit in a time interval z;

$\mathrm{Pr}_z^{purchElect}$ = electricity purchase price in the time interval z;

if the preceding conditions are not met, the electric profit is defined as: $Tp_z^{elect} \cdot \mathrm{Pr}_z^{saleElect}$; whereas:

$\mathrm{Pr}_z^{saleElect}$ = electricity sale price in the time interval z.

4. Method according to any of the previous claims, **characterized in that** the problem of optimizing the function is solved by means of a metaheuristic optimization technique using a genetic algorithm with real encoding to represent each of the solutions of the problem, wherein the genes of the algorithm represent the values $x_z^j$ which control a micro cogeneration in a time interval z

5. Method according claim 4, wherein the genetic algorithm uses the following operators:

- classic mutation operator: randomly selected gene values are switched with also randomly generated values using to that end a mutation probability value;

- one-point crossover operator: the value assigned to the children's genes is inherited from the parents, the selected point being who determines from after which gene the genes come from one parent or the other;

- selection operator: the probability of selecting an individual is proportional to its goodness of fit;

- local Gaussian search operator: changes are made in all the genes of the individual using Gaussian distribution for that purpose.

**6.** Method for controlling the operation of at least one micro cogeneration unit which is part of a system for producing energy also comprising an auxiliary heat production system and a heat storage system, said method optimizes the operation of the at least one micro cogeneration unit in a time interval z determined according to economic criteria, the method being **characterized in that** it comprises the following steps:

- obtaining the following input data which technically characterize the system:

$P_{chp}^{heat,j}$ = heat output of the micro cogeneration unit j;

$P_{chp}^{elect,j}$ = electrical output of the micro cogeneration unit j;

$\Delta z$ = duration of a time interval z;

$Pr_{z}^{gas,j}$ = price of the gas consumed by the micro cogeneration unit j in a time interval z;

$\eta_{chp}^{j}$ = overall efficiency of the micro cogeneration unit j;

$Pr_{z}^{gas,prodAux}$ = price of the gas consumed by the auxiliary heat production system in a time interval z;

$\eta_{prodAux}$ = heat efficiency of the auxiliary heat production system;

N = number of time intervals in the period considered;

J = total number of micro cogeneration units in the system;

- obtaining from the input data a value of a variable $x_z^j$ which minimizes the following target function:

$$\text{Min} \sum_{z=1}^{N} \left[ \left( \sum_{j=1}^{J} \left( \frac{(P_{chp}^{heat,j} + P_{chp}^{elect,j}) \cdot \Delta z \cdot Pr_{z}^{gas,j}}{\eta_{chp}^{j}} - B_{z}^{elect,j} \right) \cdot x_{z}^{j} \right) + \frac{Pr_{z}^{gas,prodAux}}{\eta_{prodAux}} \cdot Q_{z}^{prodAux} \right];$$

where:

$x_z^j$ is the operating set-point of the micro cogeneration unit j in a time interval z, $x_z^j$ takes the values zero or one;

$Q_z^{prodAux}$ = heat energy produced by the auxiliary heat production system in a time interval z;

$B_z^{elect}$ = total electric profit in a time interval z, it is calculated as the sum of the electric profits corresponding to all the micro cogeneration units present in the installation depending on economic criteria;

- controlling the operation of the at least one micro cogeneration unit during the time interval z from the value obtained for the variable $x_z^j$, if said value is equal to zero the micro cogeneration unit switches off and if it is equal to one the micro cogeneration unit switches on at maximum output during the time interval z.

**7.** Method according to claim 6, wherein the at least one micro cogeneration unit is interconnected with a distribution network and a building, such that the electrical energy it produces is directed either towards said distribution network or towards said building for its self-consumption depending on a economic criterion which is a comparison between an electricity purchase price and sale price for each time interval z, such that in the case in which the sale price is greater than the purchase price; or the sale price is less than the purchase price and the electrical energy produced by the at least one micro cogeneration unit is less than the electric demand of the building; the electrical energy generated by the at least one micro cogeneration unit is directed towards the distribution network and, in that case,

the electric profit is defined as: $B_z^{elect} = Pr_z^{saleElectr} \cdot P_{chp}^{elect} \cdot \Delta z$; z = 1...N;

considering the input data:

$P_{chp}^{elect,j}$ = electrical output of the micro cogeneration unit j;

$Pr_z^{saleElect}$ = electricity sale price in the time interval z;

and in the case in which the purchase price is greater than the sale price and the electrical energy generated by the at least one micro cogeneration unit is greater than the electric demand of the building, it is directed towards the building and the electric profit is: $B_z^{electr} = Pr_z^{purchElectr} \cdot P_{chp}^{elect} \cdot \Delta z$; z = 1...N;

also considering the input data:

$Pr_z^{purchElect}$ = electricity purchase price in the time interval z.

**8.** Method according claim 6, wherein the at least one micro cogeneration unit is interconnected with a distribution network and a building such that all the energy it produces is directed towards the building and in that case if the electrical energy produced is less than the electric demand of the building, the electric profit is defined as :

$B_z^{electr} = Pr_z^{purchElectr} \cdot P_{chp}^{elect} \cdot \Delta z$; z = 1...N;

and in the case in which the electrical energy produced is greater than the electric demand of the building, the surplus energy is supplied to the distribution network, the electric profit being defined as:

$B_z^{electr} = Pr_z^{saleElectr} \cdot (P_{chp}^{elect} \cdot \Delta z - D_z^{elect}) + Pr_z^{purchElect} \cdot D_z^{elect}$; z = 1...N;

also considering the input data:

$P_{chp}^{elect,j}$ = electrical output of the micro cogeneration unit j;

$Pr_z^{purchElect}$ = electricity purchase price in the time interval z;

$Pr_z^{saleElect}$ = electricity sale price in the time interval z;

$D_z^{elect}$ = electric demand in the time interval z.

**9.** Method according to claim 6, wherein the at least one micro cogeneration unit is interconnected with a distribution network such that all the electrical energy produced by the at least one micro cogeneration unit is delivered to the distribution network and in that case the electric profit is defined as: $B_z^{elect,j} = Pr_z^{saleElectr} \cdot P_{chp}^{elect,j} \cdot \Delta z$; z = 1...N; j = 1...J;

also considering the input data:

$Pr_z^{saleElect}$ = electricity sale price in the time interval z;

$P_{chp}^{elect,j}$ = electrical output of the micro cogeneration unit j;

**10.** Method according to any of the previous claims, **characterized in that** the problem of optimizing the target function is solved by means of a technique for solving mixed integer linear problems applied on said target function and some constraints.

**11.** Method according to claim 10, wherein the constraints comprise a heat balance constraint for the heat storage system, an initial temperature constraint for the storage system and a maximum temperature and minimum temperature constraint for the heat storage system.

**12.** Method according to claim 11, wherein the constraints comprise a production limit constraint for the auxiliary heat production system and energy generation set-point constraints of the auxiliary heat production system in the system which are:

- if there is a heat demand in the system less than the energy generated by the at least one micro cogeneration unit plus all the energy stored in the heat storage system, the auxiliary heat production system produces an amount of energy equal to zero;
- if there is a heat demand in the system greater than the energy generated by the at least one micro cogeneration unit plus all the energy stored in the heat storage system, the auxiliary heat production system produces energy until covering the heat demand not covered by the at least one micro cogeneration unit and the heat storage system.

**13.** Method according to claim 12, wherein the constraints comprise a constraint on the maximum heat dissipated by a heat sink which is part of the system, said dissipated heat cannot exceed the energy generated by the at least one micro cogeneration unit at any time instant nor can it exceed a maximum output of the heat sink and/or constraints on the working of the heat sink which are:

- if the temperature of the fluid in the heat storage system is less than the maximum temperature, the dissipated heat is nil;
- if the temperature of the fluid in the heat storage system is equal to the maximum temperature, the dissipated heat ranges between zero and the maximum output of the heat sink.

**14.** Method according to claim 13, wherein the constraints comprise a constraint which imposes logic conditions for a binary variable which records a stop and a binary variable which records a start of the at least one micro cogeneration unit, assigning a value equal to one to said binary variables in the case of stop or start, respectively, and preventing a value equal to one in the two variables simultaneously

**15.** Method according to claim 14, wherein the constraints comprise a constraint on the minimum working times of the at least one micro cogeneration unit, to that end a constraint is imposed on an initial time interval which forces the at least one micro cogeneration unit to, in the case of being on at the beginning of the period considered, continue being on until exceeding a minimum working time and a constraint for the end intervals of the period considered where there is not a number of consecutive hours equal to the minimum working time; and/or a constraint on the maximum number of starts of the at least one micro cogeneration unit; and/or a periodicity constraint which assures the same temperature of the fluid at the beginning and at the end of the programming period in the heat storage system.

**16.** Computer program comprising code means suitable for performing the steps of any of claims 1-15 when said program is run in a computer or in a digital signal processor or in a field programmable gate array or in a specific application integrated circuit or in a microprocessor or in a microcontroller or in any other form of programmable hardware.

FIG. 1

Electrical Network

Switch 1

Meter 1

Switch 2

Meter 2

loads

1    2    ...    J

Micro cogeneration
units

# FIG. 2

Electrical Network

Meter 1

Meter 2

loads

1    2    ...    J

Micro cogeneration
units

# FIG. 3

Electrical Network

Meter 2

loads

Meter 1

1    2    ...    J

Micro cogeneration
units

FIG. 4

$Pr_z^{saleElect} > Pr_z^{purchElect}$ ?

No

Yes

purchase-sale?

No

$D_z^{elect} > Tp_z^{elect}$ ?

No

self-consumption-sale?

No

Yes

Strategy = "self-consumption"
(excess generation: "sale")

$B_z^{elect} = Pr_z^{saleElect} \cdot (Tp_z^{elect} - D_z^{elect}) + Pr_z^{purchElect} \cdot D_z^{elect}$

Yes

Yes

self-consumption-purchase ?

Yes

Strategy = "self-consumption"

$B_z^{elect} = Pr_z^{purchElect} \cdot Tp_z^{elect}$

No

Strategy = "sale"

$B_z^{elect} = Pr_z^{saleElect} \cdot Tp_z^{elect}$

## FIG. 5

$$Pr_z^{\text{purchElect}}$$
$$Pr_z^{\text{saleElect}}$$

Decision: $Pr_z^{\text{saleElect}} > Pr_z^{\text{purchElect}}$ ?

Yes → Strategy = "sale"

$$B_z^{\text{elect}} = Pr_z^{\text{saleElect}} \cdot P_{\text{chp}}^{\text{elect}} \cdot \Delta z$$

No ↓

$D_z^{\text{Elect}}$ →

Decision: $D_z^{\text{elect}} > P_{\text{chp}}^{\text{elect}} \ast \Delta z$ ?

No → (to "sale" box)

Yes ↓

Strategy = "self-consumption"

$$B_z^{\text{elect}} = Pr_z^{\text{purchElect}} \cdot P_{\text{chp}}^{\text{elect}} \cdot \Delta z$$

FIG. 6

$D_z^{Elect}$

$\downarrow$

¿$D_z^{elect}$ >

$P_{chp}^{elect}$ *$\Delta z$ ?

No $\rightarrow$

Strategy = "self-consumption"

(excess generation: "sale")

$B_z^{elect} = Pr_z^{saleElect} \cdot (P_{chp}^{elect} \cdot \Delta z - D_z^{elect}) + Pr_z^{purchElect} \cdot D_z^{elect}$

Yes

Strategy = "self-consumption"

$B_z^{elect} = Pr_z^{purchElect} \cdot P_{chp}^{elect} \cdot \Delta z$

FIG. 7

## INTERNATIONAL SEARCH REPORT

| International application No |
| --- |
| PCT/ES2010/070870 |

**A. CLASSIFICATION OF SUBJECT MATTER**
INV. G05B13/02    H02J3/00
ADD.

According to International Patent Classification (IPC) or to both national classification and IPC

**B. FIELDS SEARCHED**

Minimum documentation searched (classification system followed by classification symbols)
G05B  H02J

Documentation searched other than minimum documentation to the extent that such documents are included in the fields searched

Electronic data base consulted during the international search (name of data base and, where practical, search terms used)
EPO-Internal, INSPEC

**C. DOCUMENTS CONSIDERED TO BE RELEVANT**

| Category* | Citation of document, with indication, where appropriate, of the relevant passages | Relevant to claim No. |
| --- | --- | --- |
| X | LAI L L ET AL: "Application of genetic algorithms to multi-time interval scheduling for daily operation of a cogeneration system", 19971111; 19971111 - 19971114, vol. 1, 11 November 1997 (1997-11-11), pages 327-331, XP006504590, | 6-10 |
| A | Sections 1,2 and 4 ----- -/-- | 1-5,16 |

[X] Further documents are listed in the continuation of Box C.       [ ] See patent family annex.

| * Special categories of cited documents : | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art. |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 22 July 2011 | 29/07/2011 |

| Name and mailing address of the ISA/ European Patent Office, P.B. 5818 Patentlaan 2 NL - 2280 HV Rijswijk Tel. (+31-70) 340-2040, Fax: (+31-70) 340-3016 | Authorized officer Prokopiou, Platon |
| --- | --- |

Form PCT/ISA/210 (second sheet) (April 2005)

## INTERNATIONAL SEARCH REPORT

International application No

PCT/ES2010/070870

C(Continuation).   DOCUMENTS CONSIDERED TO BE RELEVANT

| Category* | Citation of document, with indication, where appropriate, of the relevant passages | Relevant to claim No. |
|---|---|---|
| X | COLLAZOS A ET AL:  "Predictive optimal management method for the control of polygeneration systems", COMPUTERS & CHEMICAL ENGINEERING, PERGAMON PRESS, OXFORD, GB, vol. 33, no. 10, 14 October 2009 (2009-10-14), pages 1584-1592, XP026469879, ISSN: 0098-1354, DOI: DOI:10.1016/J.COMPCHEMENG.2009.05.009 [retrieved on 2009-05-21] | 6-15 |
| A | page 1584 - page 1586 ----- | 1-5,16 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6757591 B2

- US 20060051633 A1